(19) Europäisches Patentamt

European Patent Office

Office européen des brevets

(11) **EP 4 148 840 A1**

(12) # EUROPEAN PATENT APPLICATION

(43) Date of publication:
**15.03.2023 Bulletin 2023/11**

(21) Application number: **22194695.7**

(22) Date of filing: **08.09.2022**

(51) International Patent Classification (IPC):
*H01M 8/04089* [(2016.01)] *H01M 8/0432* [(2016.01)]
*H01M 8/0438* [(2016.01)] *H01M 8/04492* [(2016.01)]
*H01M 8/04791* [(2016.01)]

(52) Cooperative Patent Classification (CPC):
**H01M 8/04089; H01M 8/04097; H01M 8/04328;
H01M 8/04388; H01M 8/045; H01M 8/04805**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021 US 202163242931 P**

(71) Applicants:
• **Cummins, Inc.
Columbus, Indiana 47201 (US)**
• **Hydrogenics Corporation
Mississauga, ON L5T 2N6 (CA)**

(72) Inventors:
• **Ancimer, Richard J.
Toronto, M6S 3R7 (CA)**
• **Forte, Paolo
Maple, L6A 2S9 (CA)**
• **Tripathi, Sumit
Columbus, 47201 (US)**
• **Van Den Bosch, Frank
Toronto, M8Z 2J4 (CA)**
• **Teene, Eero
Hamilton, L9C 3Y6 (CA)**

(74) Representative: **Bryer, Pamela Ruth
Marks & Clerk LLP
40 Torphichen Street
Edinburgh EH3 8JB (GB)**

(54) **SYSTEMS AND METHODS TO MEASURE OR CONTROL FUEL CELL STACK EXCESS HYDROGEN FLOW**

(57) The present disclosure generally relates to systems and methods for determining, managing, and/or controlling excess hydrogen flow in a system comprising a fuel cell or fuel cell stack.

*FIG. 1A*

EP 4 148 840 A1

**Description**

TECHNICAL FIELD

The present disclosure relates to systems and methods for measuring, managing, and/or controlling excess hydrogen flow in a system comprising a fuel cell or a fuel cell stack.

BACKGROUND

Vehicles and/or powertrains use fuel cells, fuel cell stacks, and/or fuel cell systems for their power needs. A minimum excess fuel target for a fuel cell system may be specified as a minimum level of an excess fuel target required by the fuel cell or fuel cell stack based on the operating conditions of the fuel cell, stack, or system. A fuel cell or fuel cell stack may have an excess fuel level higher than the minimum excess fuel target, but achieving that higher level may result in a high parasitic load on the fuel cell or fuel cell stack. For example, an excess fuel level higher than the minimum excess fuel target may be achieved by maintaining high fuel flow rates at the anode which may lead to a pressure loss in the fuel cell, stack, or system.

If the minimum level of excess fuel is not achieved, the performance or efficiency of the fuel cell or fuel cell stack may be reduced. Additionally, the rate of reversible and/or irreversible aging of the fuel cell membrane electrode assembly (MEA) may increase, leading to permanent reduction in efficiency or a shorter fuel cell life. This may require earlier replacement of the fuel cell or fuel cell stack at additional costs.

Currently, there are no methods or systems that enable a fuel management system to directly measure the excess fuel level in a system comprising a fuel cell or a fuel cell stack. The present disclosure relates to systems and methods for measuring, managing, and/or controlling excess hydrogen flow in a system comprising a fuel cell or a fuel cell stack.

SUMMARY

Embodiments of the present invention are included to meet these and other needs.

In one aspect of the present disclosure, described herein, a fuel stack system or apparatus includes a first flow stream and a second flow stream mixing to form a third flow stream and a controller. The third flow stream flows through an anode inlet in a fuel cell stack in the fuel cell stack system. The controller compares an excess fuel ratio of the fuel cell stack system to a target excess fuel ratio of the fuel cell stack system.

In some embodiments, the fuel cell stack system may further include a blower, an ejector, or a by-pass valve. In some embodiments, the controller may determine when to operate the blower or may determine the blower speed depending on the excess fuel cell stack system. In some embodiments, the controller may determine operation of the by-pass valve depending on the excess fuel ratio of the fuel cell stack system. In some embodiments, the fuel cell stack system may include a first ejector and a second ejector. The controller may determine whether to operate the first ejector, the second ejector, or both the first and second ejectors depending on the excess fuel ratio of the fuel cell stack system.

In some embodiments, the fuel cell stack system may include at least one physical or virtual sensor. In some embodiments, the physical or virtual sensor may be a single point pressure sensor or a differential pressure sensor. In some embodiments, the physical or virtual sensor may measure pressure across the fuel cell stack, measure pressure across an ejector, or measure pressure across a blower in the fuel cell stack system. In some embodiments, the controller may further measure mass flow rate in the first flow stream or the mass flow rate in the second flow stream. The controller may determine an entrainment ratio of the fuel cell stack system based on the measured pressure across the fuel cell stack or the measured pressure across the ejector, and based on the measured mass flow rate in the first flow stream or the measured mass flow rate in the second flow stream.

In some embodiments, if the entrainment ratio of the system is different than a target entrainment ratio, the controller may operate the blower, alter the speed of the blower, operate one or more ejectors, or the by-pass valve. If the one or more ejectors includes a first ejector and a second ejector, the controller may determine the operation of the first ejector and the second ejector. In some embodiments, the entrainment ratio may have an uncertainty of less than 12%.

In some embodiments, the physical or virtual sensor may include a temperature sensor. In some embodiments, the temperature sensor may measure a temperature difference across a mixing point in the fuel cell stack system. In some embodiments, the controller may determine an entrainment ratio of the fuel cell stack system based on the temperature difference across the mixing point by using energy balance in the fuel cell stack system. In some embodiments, the temperature difference across the mixing point may be maximized.

In some embodiments, if the entrainment ratio of the fuel cell stack system is different than a target entrainment ratio, the controller may operate a blower, alter the speed of the blower, operate one or more ejectors, or operate a by-pass valve. If the one or more ejectors includes a first ejector and a second ejector, the controller may determine the operation of the first ejector and the second ejector.

In some embodiments, the controller may use a model to determine an entrainment ratio of the fuel cell stack system based on operating conditions of the fuel cell stack system.

In some embodiments, a model may be used to determine the entrainment ratio of the fuel cell stack system based on operating conditions of the fuel cell stack system. The model may be a correlational model or a component based model. In some embodiments, the fuel cell stack system may include a first ejector and a second ejector. The controller may further determine whether to operate the first ejector, the second ejector, or both the first ejector and the second ejector depending on the excess fuel ratio of the fuel cell stack system.

In a second aspect of the present disclosure, a method of determining an excess fuel ratio of a fuel cell stack system or apparatus includes the steps of mixing a first flow stream and a second flow stream to form a third flow stream, flowing the third flow stream through an anode inlet in a fuel cell stack, using a controller to compare an excess fuel ratio of the fuel cell stack system to a target excess fuel ratio of the fuel cell stack system, and measuring pressure across the fuel cell stack or measuring pressure across an ejector, or measuring pressure across a blower by using a physical or virtual sensor.

At least some of the above and other features of the invention are set out in the claims.

BRIEF DESCRIPTION OF THE DRAWINGS

These and other features, aspects, and advantages of the present invention will become better understood when the following detailed description is read with reference to the accompanying drawings, in which like characters represent like parts throughout the drawings, wherein:

FIG. 1A is an illustration of a fuel cell system including one or more fuel cell stacks connected to a balance of plant.
FIG. 1B is an illustration of a fuel cell system having fuel cell modules, each fuel cell module having fuel cell stacks and/or fuel cells.
FIG. 1C is an illustration of components of a fuel cell in the fuel cell stack.
FIG. 2 is a graph showing the operating curves of a system comprising a fuel cell or fuel cell stack.
FIG. 3 is a schematic showing an embodiment of a venturi or ejector in a fuel cell stack system.
FIG. 4 is a schematic showing a flow restriction used along with a venturi or ejector in a fuel cell stack system.
FIG. 5 is a schematic of an embodiment of a venturi or ejector in a fuel cell stack system comprising two locations for performing energy balance.
FIG. 6 is a schematic showing a flow restriction used along with a venturi or ejector in a fuel cell stack system comprising two locations for performing energy balance.

DETAILED DESCRIPTION

The present disclosure relates to systems and methods for determining, managing, and/or excess hydrogen flow in a system comprising a fuel cell **20** or fuel cell stack **12**. More specifically, the present disclosure relates to using pressure and/or temperature measurements for determining, managing, and/or excess hydrogen flow in a system comprising a fuel cell **20** or fuel cell stack **12**. The present disclosure also relates to using computational models for determining, and/or managing excess hydrogen flow in a system comprising a fuel cell **20** or fuel cell stack **12**. This disclosure relates to overcoming challenges in a fuel management system for directly measuring the excess fuel flow.

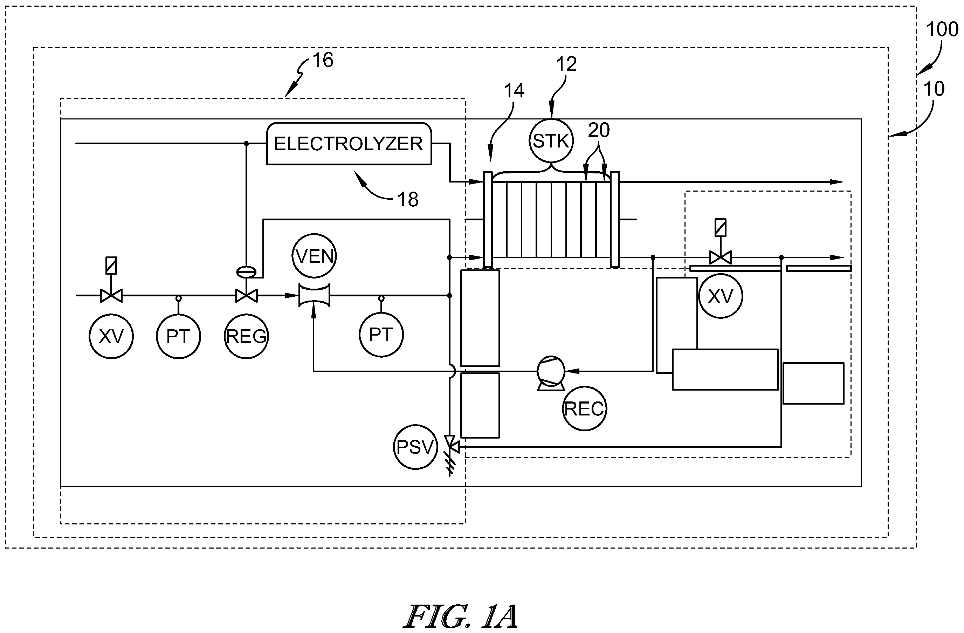

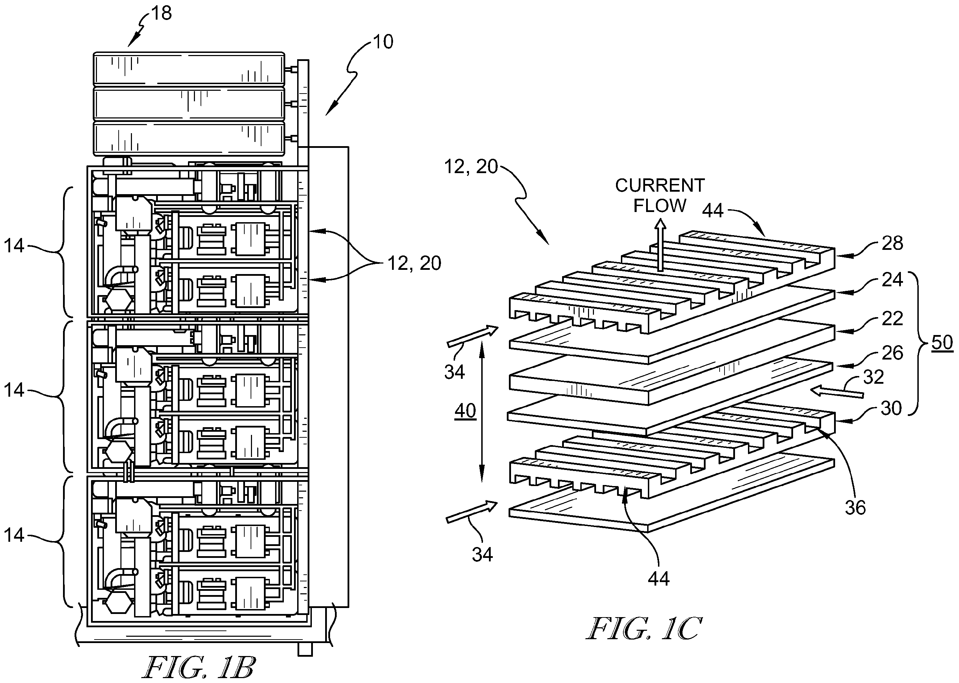

As shown in **FIG. 1A,** fuel cell systems **10** often include one or more fuel cell stacks **12** or fuel cell modules **14** connected to a balance of plant (BOP) **16,** including various components, to create, generate, and/or distribute electrical power for meet modern day industrial and commercial needs in an environmentally friendly way. As shown in **FIGS. 1B** and **1C,** fuel cell systems **10** may include fuel cell stacks **12** comprising a plurality of individual fuel cells **20**. Each fuel cell stack **12** may house a plurality of fuel cells **20** connected together in series and/or in parallel. The fuel cell system **10** may include one or more fuel cell modules **14** as shown in **FIGS. 1A** and **1B**. Each fuel cell module **14** may include a plurality of fuel cell stacks **12** and/or a plurality of fuel cells **20**. The fuel cell module **14** may also include a suitable combination of associated structural elements, mechanical systems, hardware, firmware, and/or software that is employed to support the function and operation of the fuel cell module **14**. Such items include, without limitation, piping, sensors, regulators, current collectors, seals and insulators.

The fuel cells **20** in the fuel cell stacks **12** may be stacked together to multiply and increase the voltage output of a single fuel cell stack **12**. The number of fuel cell stacks **12** in a fuel cell system **10** can vary depending on the amount of power required to operate the fuel cell system **10** and meet the power need of any load. The number of fuel cells **20** in a fuel cell stack **12** can vary depending on the amount of power required to operate the fuel cell system **10** including the fuel cell stacks **12**.

The number of fuel cells **20** in each fuel cell stack **12** or fuel cell system **10** can be any number. For example, the number of fuel cells **20** in each fuel cell stack **12** may range from about 100 fuel cells to about 1000 fuel cells, including any specific number or range of number of fuel cells **20** comprised therein (e.g., about 200 to about 800). In an embodiment, the fuel cell system **10** may include about 20 to about 1000 fuel cells stacks **12,** including any specific number or range of number of fuel cell stacks **12** comprised therein (e.g., about 200 to about 800). The fuel cells **20** in the fuel cell stacks **12** within the fuel cell module **14** may be oriented in any direction to optimize the operational efficiency and functionality of the fuel cell system **10.**

The fuel cells **20** in the fuel cell stacks **12** may be any type of fuel cell **20**. The fuel cell **20** may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an embodiment, the fuel cells **20** may be a polymer electrolyte membrane or proton exchange membrane (PEM) fuel cell or a solid oxide fuel cell (SOFC).

In an embodiment shown in **FIG. 1C,** the fuel cell stack **12** includes a plurality of proton exchange membrane (PEM) fuel cells **20**. Each fuel cell **20** includes a single membrane electrode assembly (MEA) **22** and a gas diffusion layer (GDL) **24, 26** on either or both sides of the membrane electrode assembly (MEA) **22** (see **FIG. 1C**). The fuel cell **20** further includes a bipolar plate (BPP) **28, 30** on the external side of each gas diffusion layers (GDL) **24, 26**. The above mentioned components, **22, 24, 26, 30** comprise a single repeating unit **50.**

The bipolar plates (BPP) **28, 30** are responsible for the transport of reactants, such as fuel **32** (e.g., hydrogen) or oxidant **34** (e.g., oxygen, air), and cooling fluid **36** (e.g., coolant and/or water) in a fuel cell **20**. The bipolar plate (BPP) **28, 30** can uniformly distribute reactants **32, 34** to an active area **40** of each fuel cell **20** through oxidant flow fields **42** and/or fuel flow fields **44**. The active area **40,** where the electrochemical reactions occur to generate electrical power produced by the fuel cell **20,** is centered within the gas diffusion layer (GDL) **24, 26** and the bipolar plate (BPP) **28, 30** at the membrane electrode assembly (MEA) **22**. The bipolar plate (BPP) **28, 30** are compressed together to isolate and/or seal one or more reactants **32** within their respective pathways, channels, and/or flow fields **42, 44** to maintain electrical conductivity, which is required for robust during fuel cell **20** operation.

The fuel cell system **10** described herein, may be used in stationary and/or immovable power system, such as industrial applications and power generation plants. The fuel cell system **10** may also be implemented in conjunction with electrolyzers **18** and/or other electrolysis system **18**. In one embodiment, the fuel cell system **10** is connected and/or attached in series or parallel to an electrolysis system **18,** such as one or more electrolyzers **18** in the BOP **16** (see **FIG. 1A**). In another embodiment, the fuel cell system **10** is not connected and/or attached in series or parallel to an electrolysis system **18,** such as one or more electrolyzers **18** in the BOP **16.**

The present fuel cell system **10** may also be comprised in mobile applications. In an embodiment, the fuel cell system **10** is in a vehicle and/or a powertrain **100**. A vehicle **100** comprising the present fuel cell system **10** may be an automobile, a pass car, a bus, a truck, a train, a locomotive, an aircraft, a light duty vehicle, a medium duty vehicle, or a heavy duty vehicle. Type of vehicles **100** can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain **100** may be used on roadways, highways, railways, airways, and/or waterways. The vehicle **100** may be used in applications including but not limited to off highway transit, bobtails, and/or mining equipment. For example, an embodiment of mining equipment vehicle **100** is a mining truck or a mine haul truck.

A fuel cell **20** or fuel cell stack **12** power module may comprise a fuel management system that controls, manages, implements, or determines the flow of the primary fuel **32** (e.g., hydrogen) as a fuel stream to the anode. The fuel flow control may occur through an anode inlet **212** at a rate that matches, exceeds, or is less than the fuel consumption rate of the fuel cell **20** or fuel cell stack **12**. The fuel flow control may depend on the recirculation rate of the fuel stream exhaust from the fuel cell or fuel cell stack outlet **214** back to the anode inlet **212**. The fuel flow control may depend on the operation of the fuel cell **20** or fuel cell stack **12** at a target pressure. The fuel flow control may depend on the maintenance of a pressure differential between the anode and cathode streams within a specified target range.

A blower and/or a pump **220** (e.g., a recirculation pump) may function at a capacity proportional to the pressure loss in the fuel cell **20** or fuel cell stack **12**. The blower and/or the pump **220** may also function at a capacity proportional to the volumetric flow rate through the blower and/or the pump **220**. The blower and/or a pump **220** may use additional power to compensate for the pressure loss. Use of additional power by the blower and/or the pump **220** may result in a high parasitic load on the fuel cell **20** or fuel cell stack **12.**

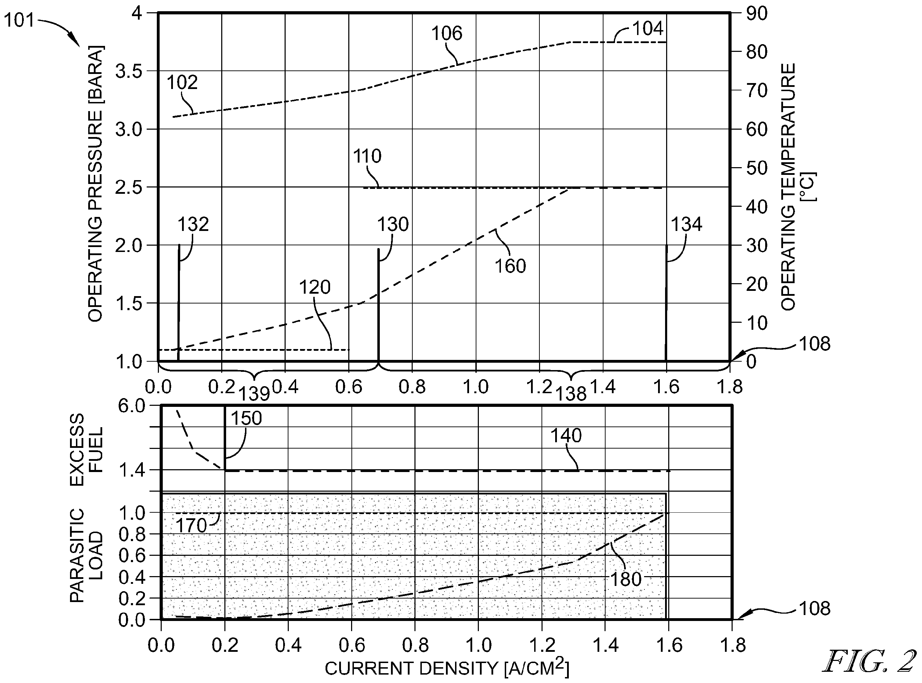

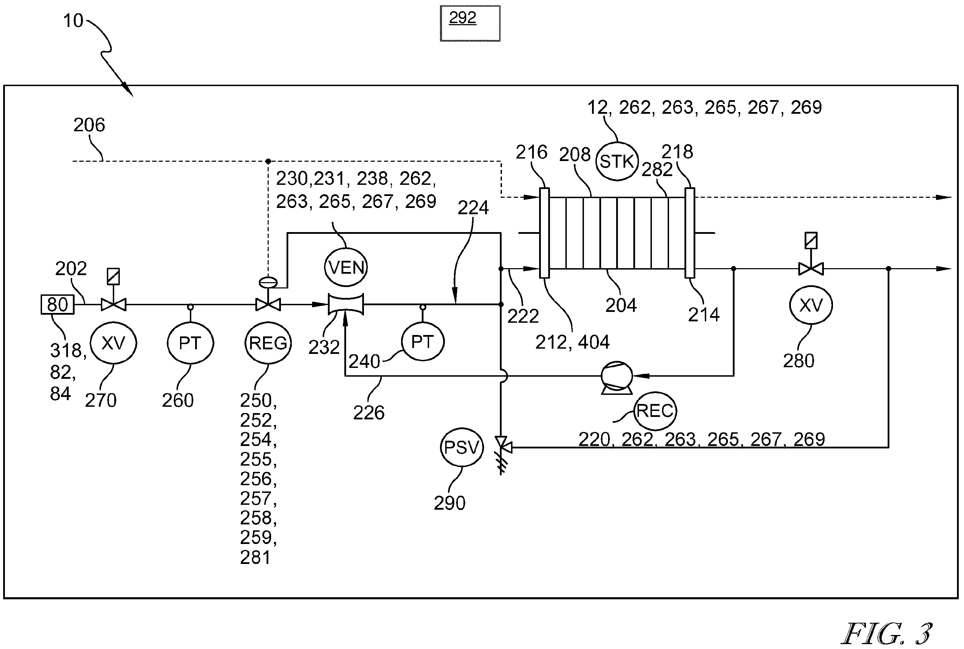

One embodiment of the operating characteristics of fuel cell system **10** comprising a fuel cell system **10** comprising a fuel cell **20** or fuel cell stack **12** is illustrated in graph **101** in **FIG. 2**. Operating pressures and the associated operating temperatures are shown as a function of current density **108**. The fuel cell **20** or fuel cell stack **12** may be required to operate within a pressure range known as anode inlet manifold pressure ($P_{AIM}$) measured at the anode inlet manifold **404** shown in **FIG. 3.**

A highest anode inlet manifold pressure ($P_{AIM\_HI}$) of a fuel cell **20** or fuel cell stack **12** is denoted by **110**. A lowest anode inlet manifold pressure ($P_{AIM\_HI}$) of a fuel cell **20** or fuel cell stack **12** is denoted by **120**. The range **160** between the highest anode inlet manifold pressure ($P_{AIM\_HI}$) **110** and the lowest anode inlet manifold pressure ($P_{AIM\_LO}$) **120** indicates a target anode inlet manifold pressure range or operating pressure. A target temperature of the fuel cell system **10** may range from a low fuel supply operating temperature ($T_{CV\_LO}$) **102** to a high fuel supply operating temperature ($T_{CV\_HI}$) **104.**

It is critical to operate the fuel cell **20** or fuel cell stack **12** at a pressure that ranges from about or approximately the highest anode inlet manifold pressure ($P_{AIM\_HI}$) **110** to about or approximately the lowest anode inlet manifold pressure ($P_{AIM\_LO}$) **120** when the fuel cell **20** or fuel cell stack **12** is operating above a critical current density ($i_{LO\_CR}$) **130.** In some embodiments, the critical current density ($i_{LO\_CR}$) **130** may be at about 0.7 A/cm$^2$. In other embodiments, the critical current density ($i_{LO\_CR}$) **130** may be at about 0.6 A/cm$^2$. In some further embodiments, the critical current density ($i_{LO\_CR}$) **130** may be higher or lower than 0.7 A/cm$^2$, such as ranging from about 0.5 A/cm$^2$ to about 0.9 A/cm$^2$, including every current density **108** or range of current density **108** comprised therein.

The fuel cell **20** or fuel cell stack **12** may operate at a high current density **138,** which may be higher than the critical current density ($i_{LO\_CR}$) **130.** The high current density **138** may range from about 1.3 A/cm$^2$ to about 2.0 A/cm$^2$, or about 1.3 A/cm$^2$ to about 1.6 A/cm$^2$, or about 1.0 A/cm$^2$ to about 1.6 A/cm$^2$, including every current density **108** or range of current density **108** comprised therein.

In some embodiments, operating the fuel cell **20** or fuel cell stack **12** at such high current density **138** (e.g., at about 1.6 A/cm$^2$) will result in operating the fuel cell **20** or fuel cell stack **12** at pressures and temperatures different from optimal target operating pressures and operating temperatures. Operating the fuel cell **20** or fuel cell stack **12** at pressures and temperatures different from the optimal target operating pressures and operating temperatures may lower the efficiency of the fuel cell **20** or fuel cell stack **12.** Such operation may also result in damage to the fuel cell **20** or fuel cell stack **12** because of MEA **22** degradation (e.g., due to starvation, flooding and/or relative humidity effects). In some embodiments, there may be more flexibility in the fuel cell **20** or fuel cell stack **12** operating pressure and operating temperature when the fuel cell **20** or fuel cell stack **12** is operating below the critical current density ($i_{LO\_CR}$) **130.** The present operating system comprising the fuel cell **20** or fuel cell stack **12** can operate at a minimum current density ($i_{MIN}$) **132** and/or a maximum current density ($i_{MAX}$) **134.**

In one embodiment, the fuel cell system **10** comprising the fuel cell **20** or fuel cell stack **12** may operate in a functional range that may be different than that indicated by the curve **160** in **FIG. 2.** The fuel cell system **10** may operate at higher pressures (e.g., the highest anode inlet manifold pressure ($P_{AIM\_HI}$) **110**) or at a current density **108** as low as the critical current density ($i_{LO\_CR}$) **130.** For example, the fuel cell system **10** may extend steady state operation at about 2.5 bara down to about the critical current density ($i_{LO\_CR}$) **130.** Pressure measurements in bara refer to the absolute pressure in bar.

**FIG. 3** illustrates one embodiment of a fuel cell system **10** comprising a fuel cell stack **12,** a mechanical regulator **250,** a recirculation pump or blower **220** in series or in parallel to the fuel cell stack **12,** an exhaust valve **280,** a purge valve **284,** a shut off valve **270,** a pressure transfer valve **290,** one or more pressure transducers **240/260,** and a venturi or an ejector **230.** In some embodiments, the fuel cell system **10** may comprise one or more fuel cell stacks **12** and/or one or more fuel cells **20.** In other embodiments, there may also be one or multiple valves, sensors, compressors, regulators, blowers, injectors, ejectors, and/or other devices in series or in parallel with the fuel cell stack **12.**

In one embodiment of the fuel cell system **10,** an anode inlet stream **222,** flows through an anode **204** end of the fuel cell stack **12.** Typically, the anode inlet stream **222** may be a mixture of fresh fuel (e.g., $H_2$) and anode exhaust (e.g., $H_2$ fuel and/or water). Conversely, oxidant **206** (e.g., air, oxygen, or humidified air) may flow through the cathode **208** end of the fuel cell stack **12.**

Excess fuel may be provided at the anode inlet **212** to avoid fuel starvation towards the anode outlet **214.** In some embodiments, the excess fuel ratio ($\lambda_{H2}$) may be greater than or equal to about 1.3 to avoid fuel starvation. Recirculated flow may be provided at the anode inlet **212** to support humidification of the membrane electrode assembly (MEA) **22.** Water content of the anode inlet stream **222** or the relative humidity of the anode inlet stream **222** may impact the performance and health of the fuel cell stack **12.** For example, low inlet humidity may lead to a drier MEA **22** resulting in reduced performance. Low inlet humidity may also induce stresses that can lead to permanent damage to the MEA **22.**.......

High anode gas inlet relative humidity levels may lead to flooding within the fuel cell **20** or fuel cell stack **12,** which can induce local starvation and/or other effects that may reduce fuel cell performance and/or damage the membrane electrode assembly (MEA) **22.** In some embodiments, there may be an optimal inlet relative humidity range in which fuel cell performance is improved and membrane electrode assembly (MEA) **22** degradation rate is minimized. For example, the fuel cell **20** or fuel cell stack **12** may achieve optimal performance when the relative humidity level of the anode inlet stream **222** is in the range of about 30% to about 35%, including any percentage or range comprised therein.

Referring to **FIG. 3**, if the anode stream at the anode outlet **214** is saturated at the fuel cell operating temperature, and if the anode inlet stream relative humidity level is about 30%, a minimum excess fuel ratio ($\lambda_{H2}$) of about 1.37 to about 1.4 may be needed to maintain fuel cell performance and/or avoid damage to the membrane electrode assembly (MEA) **22.** In other embodiments, if the anode stream at the anode outlet **214** is saturated at the fuel cell operating temperature, and if the relative humidity level is about 35%, a minimum excess fuel ratio ($\lambda_{H2}$) of about 1.45 to about 1.51 may be needed to maintain fuel cell performance and/or avoid damage to the membrane electrode assembly (MEA) **22.**

Referring to **FIG. 1C,** coolant **36** flow in a fuel cell **20** or fuel cell stack **12** is provided to manage the heat generated within the fuel cell **20** or fuel cell stack **12** that may arise due to inefficiencies. Coolant **36** flow passages may be designed to enable effective heat transfer to remove any waste heat. A finite coolant heat capacity based on the coolant flow rate and coolant specific heat capacity may result in temperature variations across the fuel cell **20** or fuel cell stack **12.** In some embodiments, design specifications may limit the allowable temperature rise across the fuel cell **20** or fuel cell stack **12.** For example, at the beginning of life (BoL), a sufficiently high coolant flow rate may be required to limit the temperature rise to be about 5 °C to about 7 °C. The inlet coolant temperature may be managed separately to meet an inlet temperature target.

As the fuel cell **20** or fuel cell stack **12** ages, the amount of heat generated within the fuel cell **20** or fuel cell stack **12** may increase. If the coolant **36** flow is maintained at the levels that meet the design specifications of the beginning of life (BoL) temperature rise, the temperature rise after aging may be more than about 5 °C to about 7 °C.

As the fuel cells **20** or fuel cell **12** stacks are designed with effective heat transfer, the local anode and cathode stream temperatures may be similar to the local coolant temperature. The anode outlet stream temperature may also affect the excess fuel ratio ($\lambda_{H2}$). The anode outlet stream temperature may be closer to the coolant inlet temperature, which may be different than the fuel cell operating temperature. Thus, the anode outlet stream temperature may be up to about 7 °C lower at the beginning of life (BoL) and may be about 10 °C lower at end of life (EoL).

The coolant **36** temperature variations across the fuel cell **20** or fuel cell stack **12** may influence the cathode and anode inlet and/or outlet stream temperatures depending on the fuel cell **20** or fuel cell stack **12** design. The fuel cell **20** or fuel cell stack **12** may be designed in many configurations with three flow streams- anode stream, cathode stream, coolant stream. For example, each of the flow streams through the fuel cell **20** or fuel cell stack **12** may have a single inlet and outlet. The flow streams may be oriented to co-flow, counter-flow, or cross-flow.

Geometric (space) constraints may preclude cross-flow, and require that two of the three streams be co-flow with the third being counter-flow. If the fuel cell **20** or fuel cell stack **12** is designed with the anode stream as counter-flow, then the cathode stream and coolant stream are co-flow. In this configuration, the anode stream outlet temperature may be close to the inlet coolant temperature, whereas the cathode inlet/outlet stream temperature may be close to the inlet/outlet coolant temperature.

Since the fuel cell **20** or fuel cell stack **12** temperature may be controlled to a target cathode outlet temperature by controlling the coolant inlet temperature, in the embodiment described above, the cathode outlet temperature may be near the coolant outlet temperature. The cathode inlet temperature may be lower than the outlet temperature by about 5 °C to about 7 °C at BoL, and by about 10 °C lower at EoL. In this same configuration, the temperature of the anode outlet stream may be near the cathode inlet temperature and may be lower than the target fuel cell temperature target by about 5 °C to about 7 °C at BoL, and by about 10 °C lower at EoL. In some embodiments, the temperature difference in any configuration during BoL may range from about 1 °C to about 3 °C, 3 °C to about 5 °C, 5 °C to about 7 °C, 7 °C to about 10 °C, 10 °C to about 12 °C, or any specific temperature or range comprised therein. In other embodiments, the temperature difference in any configuration during EoL may range from about 5 °C to about 7 °C, 7 °C to about 10 °C, 10 °C to about 12 °C, 12 °C to about 15 °C, or any specific temperature or range comprised therein.

The fuel cell **20** or fuel cell stack **22** may be designed such that the anode stream co-flows with the coolant **36,** and the anode outlet stream temperature may be higher than the anode gas inlet temperature.

If the anode outlet stream temperature is about 10 °C lower than the target temperature, and if the relative humidity level is about 30%, a minimum excess fuel ratio ($\lambda_{H2}$) of about 1.40 to about 1.49 may be needed to maintain fuel cell performance and/or avoid damage to the membrane electrode assembly (MEA) **22.** If the anode outlet stream temperature is about 10 °C lower than the target temperature, and if the relative humidity level is about 35%, a minimum excess fuel ratio ($\lambda_{H2}$) of about 1.50 to about 1.8 may be needed to maintain fuel cell performance and/or avoid damage to the membrane electrode assembly (MEA) **22.** The increase in the needed excess fuel ratio ($\lambda_{H2}$) may be more noticeable at high current densities where the change in temperature is larger.

The source of the excess fuel and water content in a fuel cell **20** may be from a secondary or recirculated flow **226.** Composition of the secondary flow **226** in the fuel cell system **10** is dependent on its composition of anode outlet stream **225.** In some embodiments, the anode outlet stream **225** may be saturated with water at a given anode outlet stream temperature and pressure. Thus, the variation in the composition of the secondary flow **226** may be taken into account when determining a required secondary flow **226** to meet the excess fuel or relative humidity targets of the anode inlet stream **222.**

The required flow rate of the secondary flow **226** can be determined by either the need for excess fuel, or by the need for increased water content, whichever calls for a higher flow of the secondary flow **226.** The required flow of the secondary flow **226** can be expressed as the target entrainment ratio (ER). The entrainment ratio (ER) is defined as the ratio of mass flow rate of the low pressure stream (e.g., the secondary mass flow rate) to the mass flow rate of the high pressure stream (e.g., the primary mass flow rate). Alternatively, a target effective excess fuel ratio ($\lambda_{H2}$) or a minimum required fuel ratio may account for either the need for excess fuel, or for the increased water content of the anode inlet stream **222**.

Excess fuel ratio ($\lambda_{H2}$) or the anode stoichiometry ratio is defined as the ratio of anode inlet stream **222** flow rate to the fuel consumed in the fuel cell **20** or fuel cell stack **12**. Excess fuel ratio ($\lambda_{H2}$) may be used to represent the required composition of the secondary flow **226** to meet the required anode inlet stream **222** characteristics. The required anode inlet stream **222** characteristics may be the more stringent of excess fuel ratio ($\lambda_{H2}$) or relative humidity requirements of the fuel cell system **10**. Minimum required excess fuel ratio ($\lambda_{H2}$) **140** as a function of current density **108** is shown in **FIG. 2**. In some embodiments, the fuel cell system **10** requires a fuel amount at or above the minimum required excess fuel ratio ($\lambda_{H2}$) **140**.

In other embodiments, the fuel cell system **10** may require a target water or humidity level, which may affect the excess fuel ratio ($\lambda_{H2}$) **140**. The excess fuel ratio ($\lambda$) **140** may be flat across the fuel cell system **10** operating range except at low current densities **108,** such as at a current density **108** at or below an excess fuel ratio current density threshold ($i_{\_\lambda\_THV}$) **150**. Alternatively, or additionally, the excess fuel ratio ($\lambda_{H2}$) **140** may change with a change in current density **108**.

In some embodiments, the excess fuel ratio ($\lambda_{H2}$) **140** above the excess fuel ratio current density threshold ($i_{\_\lambda\_THV}$) **150** may be in the range from about 1.3 to about 1.9, including any ratio comprised therein. In one preferable embodiment, the excess fuel ratio ($\lambda_{H2}$) **140** above the excess fuel ratio current density threshold ($i_{\_\lambda\_THV}$) **150** may be in the range of about 1.4 to about 1.6, including any ratio or range of ratio comprised therein.

In some embodiments, the excess fuel ratio current density threshold ($i_{\_\lambda\_THV}$) **150** of the fuel cell system **10** may be at or about 0.2 A/cm$^2$. In other embodiments, the excess fuel ratio current density threshold ($i_{\_\lambda\_THV}$) **150** may be at a different current density **108**. For example, the excess fuel ratio current density threshold ($i_{\_\lambda\_THV}$) **150** may be at a current density **108** in the range of about 0.05 A/cm$^2$ to about 0.4 A/cm$^2$, including any current density **108** or range of current density **108** comprised therein. In one preferable embodiment, the excess fuel ratio current density threshold ($i_{\_\lambda\_THV}$) **150** may be about 0.1 A/cm$^2$ or about 0.2 A/cm$^2$. The excess fuel ratio current density threshold ($i_{\_\lambda\_THV}$) **150** may depend on the operating conditions of the fuel cell **20** or fuel cell stack **12**.

In one embodiment, if the fuel cell **20** or fuel cell stack **12** is operating below the excess fuel ratio current density threshold ($i_{\_\lambda\_THV}$) **150,** a minimum volumetric flow rate may be maintained through the anode **204** to flush out any liquid water that might form in the fuel cell **20** or fuel cell stack **12**. At low flow rates (e.g., below about 0.2 A/cm$^2$ or below about 0.1 A/cm$^2$), there may be flooding in the fuel cell **20** or fuel cell stack **12**. If the minimum volumetric flow rate is below the excess fuel ratio current density threshold ($i_{\_\lambda\_THV}$) **150,** the rate of fuel cell **20** or fuel cell stack **12** degradation may increase and the performance of the fuel cell or fuel cell stack may be adversely affected.

The venturi or an ejector **230** may be used in the fuel cell system **10**. The venturi or ejector **230** may be sized, such that the fuel cell system **10** may not require the assistance of a recirculation pump **220,** such as a blower, at certain current densities **108**. Absence of usage of the recirculation pump or blower **220** may result in a decrease in parasitic load, as shown by the curves **170** and **180** of **FIG. 2**. The curve **170** shows a fraction of flow that is delivered by the recirculation pump or blower **220** in the absence of a venturi or ejector **230**. The curve **180** shows the corresponding parasitic load.

The parasitic load may increase with an increase in current density, as shown by the curve **180**. This recirculation pump or blower **220** may function at a capacity proportional to pressure loss in the fuel cell **20** or fuel cell stack **12** and/or proportional to the required flow rate of the secondary flow **226** in the fuel cell **20** or fuel cell stack **12**. The fuel cell **20** or fuel cell stack **12** may be initially operating at high current density **138** and/or at high operating temperatures and pressures, such that the fuel cell load under this initial operating condition is high. The fuel cell load is defined as: Load = stack power = current x fuel cell or fuel cell stack voltage = current density x fuel cell area x fuel cell or fuel cell stack voltage. The fuel cell **20** or fuel cell stack **12** may be in a load shedding state when the load demand for power is rapidly reduced or shed requiring the fuel cell **20** or fuel cell stack **12** to reduce the current delivered

During transient operations in the fuel cell **20** or fuel cell stack **12,** the operating pressure in the fuel cell **20** or fuel cell stack **12** may change based on the changes in the fuel cell **20** or fuel cell stack **12** operating temperature. For example, during load shedding, the fuel cell system **10** may have an operating pressure that corresponds to a transient operating pressure ($P_{\_AIM\_TRS}$) that may be greater than its steady state operating pressure ($P_{\_AIM\_SS}$). In some embodiments, the transient operating pressure ($P_{\_AIM\_TRS}$) may equal the highest anode inlet manifold pressure ($P_{AIM\_HI}$) **110** even at low current densities **108**. During load acceptance, the rate of increase in current density **108** is limited, and the steady state operating pressure ($P_{\_AIM\_SS}$) may equal the anode inlet manifold pressure ($P_{AIM}$).

During load acceptance, the fuel cell **20** or fuel cell stack **12** operating temperature may overshoot the target operating temperature due to imperfect temperature control via coolant thermostatic controls. The operating pressure under such conditions is higher than the operating pressure under nominal (steady state) operation. This situation is similar to that which occurs during rapid load shedding.

In one embodiment, the operating pressure of the fuel cell **20** or fuel cell stack **12** may optimize the balance between enabling efficient fuel cell **20** or fuel cell stack **12** operation and the parasitic load required to operate at the chosen operating pressure (e.g., the parasitic load of an air compressor, a blower, and/or a pump). In some embodiments, the operating temperature, operating pressure, and/or excess air ratio may maintain a target relative humidity (RH) for the fuel cell **20** or fuel cell stack **12** operation. The operating temperature, operating pressure, and/or excess air ratio may be determined by targeting a specific value for the relative humidity (RH) at the cathode **208.**

The excess air ratio is defined similarly to excess fuel ratio ($\lambda_{H2}$) **140,** but refers to the cathode **208** side flow (i.e., excess $O_2$ in the air). The combination of excess air ratio, pressure and temperature are used together to control humidity on the cathode **208** side, which in turn impacts water content on the anode **204** ($H_2$) side. In one embodiment, temperature, pressure, and excess air ratio that vary with current density may be used to control humidity on the cathode **208** side. In some embodiments, excess air ratio may be about 2.0.

In other embodiments, excess air ratio may be in the range of about 1.7 to about 2.1, including any ratio or range of ratio comprised therein. In some other embodiments, excess air ratio may be in the range of about 1.8 to about 1.9, including any ratio or range of ratio comprised therein, under pressurized operation. Excess air ratio may increase to below an air threshold current to keep volumetric flow rate high enough to prevent flooding in the fuel cell **20** or fuel cell stack **12** on the cathode **208** side.

The target relative humidity (RH) may be maintained by using a humidification device in combination with the operating pressure and operating temperature. For example, a humidification device may be used on the cathode **208** side of the fuel cell **20** or fuel cell stack **12.** If the target relative humidity (RH) and the target operating pressure of the fuel cell **20** or fuel cell stack **12** are specified, the target temperature for the fuel cell **20** or fuel cell stack **12** operation may be determined.

The mechanical regulator **250** is a control valve **256** that may be used to control the flow of fresh fuel **202** also referred to as primary flow, primary mass flow, primary fuel, or motive flow to the anode **204..** The control valve **256** may be a proportional control valve, or an injector instead of the mechanical regulator **250** (e.g., a dome regulated mechanical regulator). The control valve **256** may comprise an inner valve **258,** coil **255,** or solenoid **257** that controls the opening or closing of the control valve **256.**

Pressure differential between the gas streams (e.g. anode inlet stream **222** and air **206**) at the anode **204** and the cathode **208** may provide an input signal **254** to a controller **252** in the mechanical regulator **250.** The controller **252** of the mechanical regulator **250** may determine the flow of the anode inlet stream **222** through an anode inlet **212** at the anode **204.** The control valve **256** may be a proportional control valve, or an injector. In other embodiments, the control valve **256** may comprise an inner valve **258,** coil **255,** or solenoid **257** that controls the opening or closing of the control valve **256.** The input signal **254** from the anode **204** and/or cathode **208** of the fuel cell **20** or fuel cell stack **12** may be a physical signal or a virtual (e.g., an electronic) signal. The input signal **254** may be any type of communicative or computer signal known in the art.

Flow rate of the primary flow **202,** or a primary flow rate, may be controlled to match the fuel consumption in the fuel cell stack **12** based on the operating pressure (e.g., anode pressure). In some embodiments, the pressure in the anode **204** may stabilize when fuel consumption matches the fresh fuel feed at the anode **204** assuming that all other parameters are equal. Since the functioning of the mechanical regulator **250** is based on the pressure differential between the anode **204** and cathode **208,** a target pressure differential needs to be maintained when using the mechanical regulator **250.** In some embodiments, pressure at the cathode **208** is controlled and/or maintained at a target level via cathode side controls **282.**

A mechanically regulated approach, such as by employing actuators **282,** may use pressure signals **281** from a cathode/air inlet **216** to control mass flow and maintain an appropriate pressure on the cathode **208** side of the fuel cell stack **12.** In some embodiments, pressure signals **218** from cathode **208** side are inputs to the mechanical regulator **250.** In some embodiments, the anode **204** side mass flow and anode **204** side pressure may be controlled by using the pressure signals **281** from cathode **208** side and measuring one or more anode **204** side conditions.

The pressure signals **281** from cathode **208** side may change the position of an inner valve **258** in the mechanical regulator **250** to control mass flow through the mechanical regulator **250** and maintain the target pressure differential between the anode **204** and the cathode **208.** The input signal **254** that acts on the mechanical regulator **250** is effectively a pressure differential that acts on a diaphragm **257** or other parts of the mechanical regulator **250.** No other direct measurement of the pressure differential may be undertaken.

A single point pressure at the anode **204** may be calculated to be the cathode **208** side pressure plus the pressure differential between the gas streams (e.g., **222**) at the anode **204** and the gas streams (e.g., **206**) at the cathode **208.** Single point pressure may be absolute pressure or gauge pressure.

The venturi or ejector **230** may draw the secondary flow **226,** also referred to as secondary mass flow, entrainment flow, or recirculation flow, using a flow pressure across an anode gas recirculation (AGR) loop **224.** As discussed later, the venturi or ejector **230** may take advantage of the available excess enthalpy from the higher pressure primary flow to draw in the secondary flow **226,** working against the pressure losses through the AGR loop **224.** The anode gas recirculation loop **224** may include the venturi or ejector **230,** the fuel cell stack **12,** and a secondary inlet **232,** such as one comprised in a suction chamber **620** in the venturi or ejector **230,** and/or other piping, valves, channels, manifolds associated with the venturi or ejector **230** and/or fuel cell stack **12**. The recirculation pump or blower **220** may increase or decrease the differential pressure across the AGR loop **224.**

The fuel cell system **10** may require a target water or humidity level, which may drive the flow of saturated secondary flow **226**. The saturated secondary flow **226** may then drive the primary flow **202**, such that the target excess fuel ratio ($\lambda_{H2}$)**140** may be dependant on the target water or humidity level.

In one embodiment, the recirculation pump or blower **220** may be used to achieve the excess fuel ratio ($\lambda_{H2}$). The recirculation pump or blower **220** may operate across the entire operating range (current density) of the fuel cell stack **12**. The parasitic load of the recirculation pump or blower **220** may be substantial. In one embodiment, a large recirculation pump or blower **220** may be required to provide the power to achieve the target excess fuel ratio ($\lambda_{H2}$) **140.** In some embodiments the use of the recirculation pump or blower **220** may be inefficient and expensive. The operating characteristics of a recirculation pump or blower **220** may be distinct from the operating conditions of the venturi or ejector **230**.

A pressure lift capability of the recirculation pump or blower **220** ($\Delta P_{\_BLWR}$) is a function of the flow through the recirculation pump or blower **220** (Q), the blower speed (N), and the density of the flow composition (p). The pressure lift of the recirculation pump or blower **220** ($\Delta P_{\_BLWR}$) may be limited by power draw limits and/or speed limit of the fuel cell system **10**. When the recirculation pump or blower **220** is not spinning or is operating under other fuel cell system **10** stall conditions, the recirculation pump or blower **220** may act as a restriction in the AGR loop **224**.

$$\Delta P_{\_BLWR} = f(Q, N, \rho) \quad (1)$$

The fuel cell system **10** may operate under varying operating conditions. Operating conditions may include, but are not limited to operating current density, operating pressure, operating temperature, operating relative humidity, fuel supply pressure, fuel supply temperature, required recirculation flow, entrainment ratio, parasitic load limitations, power needs, pressure loses in the AGR loop **224,** venturi or ejector **230** performance and/or efficiency, recirculation pump or blower **220** performance and/or efficiency, fuel density, purge flow, and choked or unchoked (e.g., not choked) flow conditions. The turn down ratio of the fuel cell system **10** is defined as the ratio of the maximum capacity of the venturi or ejector **230** to the minimum capacity of the venturi or ejector **230**. The venturi or ejector **230** may draw the recirculation flow **226** using a primary flow exergy. The turn down ratio characterizes the range over which the venturi or ejector **230** can deliver the required excess fuel ratio ($\lambda_{H2}$) **140** to the fuel cell stack **12**. The fuel cell system **10** may be designed to maximize the venturi or ejector **230** turn down ratio. Consequently, maximizing the turn down ratio of the venturi or ejector **230** also works to minimize the size and parasitic load associated with the recirculation pump or blower **220**. In some embodiments, the venturi or ejector **230** may be required to operate and/or perform robustly to deliver the required primary flow **202** at the required excess fuel ratio ($\lambda_{H2}$) **140.**

In one embodiment, a fuel supply system **80** may supply fuel at a fuel supply pressure (Pcv) and a fuel supply temperature (Tcv). The primary flow **202** may pass through the control valve **256** and enter the venturi or ejector **230** through a primary nozzle **231** at a primary nozzle inlet pressure (Po) and a primary inlet temperature (To). The secondary flow **226** may enter the venturi or ejector **230** through a secondary inlet or entrance **232** in a suction chamber **620** at a secondary inlet pressure (Ps) and a secondary inlet temperature (Ts).

Sizing pressure ($P_{\_CV\_MIN}$) may be a minimum inlet pressure at a control valve **256** such as the proportional control valve or mechanical regulator **250** or injector. In other embodiments, fuel sizing pressure ($P_{\_CV\_MIN}$) may be the pressure at the inlet of a control valve **256** under empty pressure conditions ($P_{EMPTY}$). The secondary flow **226** may enter the venturi or ejector **230** through a secondary inlet **232** in a suction chamber **620** at a secondary inlet pressure (Ps) and a secondary inlet temperature (Ts).

The venturi or ejector **230** may have exergy available in primary flow to induce the anode gas recirculated flow as the secondary flow **226** in the venturi or ejector **230**. The stack pressure ($\Delta P_{STACK}$) is the pressure loss through the AGR loop **224**. The secondary flow **226** may be lifted against the stack pressure ($\Delta P_{STACK}$).

The pressure lift ($\Delta P_{LIFT}$) is the pressure required to overcome the pressure loses in the AGR loop **224** ($\Delta P_{STACK}$). In some embodiments, the pressure lift ($\Delta P_{LIFT}$) may be dominated by the pressure losses through the fuel cell stack **12** or any other component of the AGR loop **224**. In some embodiments, pressure losses may be proportional to volumetric flow rate through one or more manifolds and/or channels in the AGR loop **224**. In other embodiments, the volumetric flow **222** at anode inlet **212** may include a mixture of fresh fuel (e.g., $H_2$) as the primary flow **202** and the recirculation flow **226**.

The secondary inlet pressure (Ps) may depend on the anode inlet manifold pressure ($P_{AIM}$) of the fuel cell or fuel cell stack **12** and the pressure loses in the AGR loop **224** ($\Delta P_{STACK}$) or the required pressure lift ($\Delta P_{LIFT}$).

$$P_S = P_{AIM} - \Delta P_{LIFT} \qquad (2)$$

The amount of secondary flow **226** that can be entrained is dictated by the boundary conditions of the fuel cell system **10** and the efficiency of the venturi or ejector **230**. In some embodiments, the boundary conditions may be the primary nozzle inlet pressure (Po), the secondary inlet pressure (Ps), the anode inlet manifold pressure ($P_{AIM}$) of the fuel cell or fuel cell stack **12**, and/or secondary flow **226** composition. In some embodiments, the secondary flow **226** from the anode outlet **214** to the venturi or ejector secondary inlet **232** is an adiabatic process. The primary inlet temperature (To) and the secondary inlet temperature (Ts) of the venturi or ejector **230** may affect secondary flow **226**.

As described earlier, above a certain critical current density ($i_{LO\_CR}$) **130,** the fuel cell system **10** is required to operate in the target anode inlet manifold pressure range indicated by the curve **160** in **FIG. 2**. The primary inlet pressure (Po) may decrease proportionally with primary fuel demand, until the primary nozzle **231** is no longer choked (i.e., unchoked). In other embodiments, if the primary nozzle **231** is unchoked, the rate of decrease of the primary inlet pressure (Po) may be non-linear and/or may be sensitive to downstream pressure such as the secondary inlet pressure (Ps). In other embodiments, the primary inlet pressure (Po) may decrease as the primary inlet temperature (To) decreases.

The primary inlet temperature (To) may be equal to the fuel supply temperature (Tcv). The primary inlet temperature (To) may affect the primary flow **202**. In some embodiments, the fuel cell system **10** may have a target mass flow rate. In other embodiments, the secondary inlet temperature (Ts) may influence the secondary flow **226** through geometric constraints of the secondary inlet **232** and/or the venturi or ejector **230**. In some embodiments, the secondary inlet temperature (Ts) may be a geometric constraint. The thermodynamic constraints and/or venturi or ejector **230** efficiency may also influence the secondary flow **226.**

The venturi or ejector **230** may be sensitive to the primary nozzle inlet pressure (Po), the backpressure, and the required pressure lift ($\Delta P_{LIFT}$). The backpressure may be an exit pressure at an ejector exit or outlet **238** (Pc) or may be the anode inlet manifold pressure ($P_{AIM}$). If there are no pressure losses to the anode inlet manifold from the venturi or ejector **230** outlet, the exit pressure at the ejector exit **238** (Pc) may be equal to the anode inlet manifold pressure ($P_{AIM}$). In some embodiment, the primary nozzle inlet pressure (Po) may be a function of the current density (i) in the fuel cell system **10.**

$$P_O = f(i) \qquad (3)$$

Entrainment ratio (ER), which is a measure of the performance and/or capability of the venturi or ejector **230** and may be sensitive to the primary nozzle inlet pressure (Po), the backpressure (e.g., Pc, $P_{AIM}$) and/or the pressure lift ($\Delta P_{LIFT}$). In one embodiment, as backpressure (e.g., Pc, $P_{AIM}$) increases, the venturi or ejector **230** may change from being double choked (with a stable entrainment ratio), to being in a transitioning condition (with a decreasing entrainment ratio), to having a reverse flow. Reverse flow in the venturi or ejector **230** may be undesirable as reverse flow indicates no fuel recirculation through the AGR loop **224**. In some embodiments, the venturi or ejector **230** may need to offset pressure losses through the fuel cell or fuel cell stack **12** ($\Delta P_{STACK}$), while operating against the backpressure (e.g., Pc, $P_{AIM}$).

Methods or systems that enable the fuel management system to directly measure the excess fuel ratio ($\lambda_{H2}$) in the fuel cell system **10** are useful to the performance of the fuel cell system **10**. While the direct measurement of the recirculation flow rate, primary flow rate, or entrainment ratio may not be possible, the fuel (e.g., H2) consumption in the fuel cell system **10** and/or any purge gas flow rate in the fuel cell system **10** may be determined. In some embodiments, the fuel consumption may be based on the operating current density.

A key function of the fuel management system may be to provide an anode gas flow rate with an excess fuel ratio ($\lambda_{H2}$) that is above a minimum value. The excess fuel ratio ($\lambda_{H2}$) may depend on the flow rate of the primary flow stream **202,** the flow rate of the recirculation flow stream **226,** and/or the composition of the recirculation flow stream **226**. The recirculation flow stream **226** may comprise fuel (e.g., $H_2$) and water.. Alternatively, or additionally, the recirculation flow stream **226** may comprise other gases such as nitrogen ($N_2$). The excess fuel ratio ($\lambda_{H2}$) is calculated as:

$$\lambda_{H2} = [(1 - x_{\_H2O\_RC} - x_{\_N2\_RC}) \, m_{\_RC} + m_{\_H2\_P}] / [m_{\_H2\_P}] \qquad (4)$$

$x_{\_H2O\_RC}$ is the mass fraction of water in the recirculation flow, $x_{\_N2\_RC}$ is the mass fraction of nitrogen in the recirculation flow, $m_{\_RC}$ is the mass flow rate of the recirculation flow, $m_{\_H2\_P}$ is the mass flow rate of fuel in the primary flow stream **202.**

In one embodiment, the relative flow rates of the recirculation flow stream **226** and the primary flow stream **202** may be considered to determine the entrainment ratio.

$$ER = [\lambda_{H2} - 1]/[(1 - x_{\_H2O\_RC} - x_{\_N2\_RC})] \qquad (5)$$

$$ER = m_{\_RC}/ m_{\_H2\_P} \qquad (6)$$

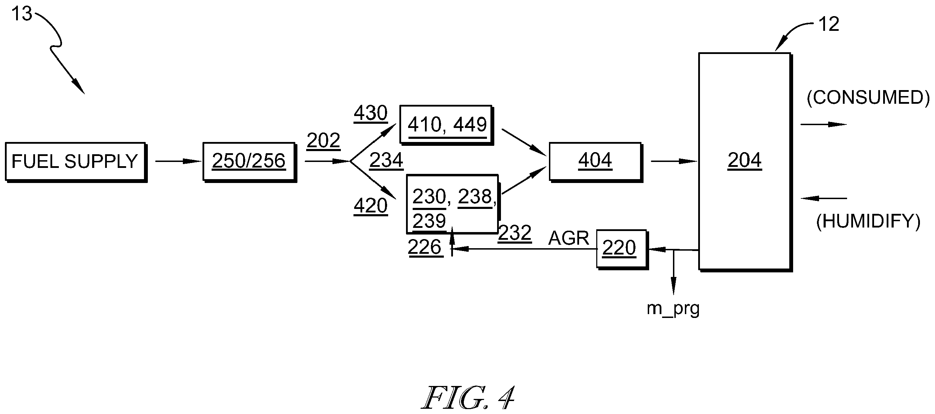

A fuel cell system **13** may be in a configuration as illustrated in **FIG. 4.** The venturi or ejector **230,** sized to support a fraction of primary flow stream **202** (e.g., H$_2$), may be placed in parallel with a by-pass valve or flow restriction **410.** At a minimum, the by-pass valve or flow restriction **410** needs open/close functionality, and must be sized to provide remainder of primary flow stream **202** that does not flow through the venturi or ejector **230.** The by-pass valve or flow restriction **410** may be a binary valve with open/close functionality. Alternatively, the by-pass valve or flow restriction **410** may have a variable opening or closing inner valve.

The by-pass valve or flow restriction **410** may be a mechanical regulator, a dome loaded mechanical regulator, an injector, or a proportional control valve. A configuration comprising a by-pass valve or flow restriction **410** may enable anode gas recirculation (AGR) requirements to be met across the entire operating range (from when the fuel cell system **13** is in idle state to when the fuel cell system **13** is functioning in the state of maximum current density).

A configuration comprising a by-pass valve or flow restriction **410** (e.g., a proportional control valve) and an adequately sized venturi or ejector **230** may enable anode gas recirculation (AGR) requirements to be met across the entire operating range (from when the fuel cell system **13** is in idle state to when the fuel cell system **13** is functioning in the state of maximum current density) without requiring a recirculation pump or blower **220.** Such a configuration is referred to as the EES (elegant ejector system) configuration.

As shown in **FIG. 4**, fresh fuel **202** may enter a control valve **256** such as a mechanical regulator **250** at a fuel supply temperature (Tcv) and fuel supply pressure (Pcv). The fresh fuel **202** may exit the mechanical regulator **250** and enter the venturi or ejector **230** or flow restriction **410** at a primary nozzle inlet pressure (Po) and primary inlet temperature (To). A certain amount of the fresh fuel **202** exiting the control valve **256** may enter the venturi or ejector **230** (m$_{\_H2\_EP}$, **420**) at the entrance **234.** A certain amount of the fresh fuel **202** exiting the control valve **256** may enter the by-pass valve or flow restriction **410** (m$_{\_H2\_RP}$, **430**). The anode gas recirculation composition **226** (m$_{\_RC}$) may enter the venturi or ejector **230** at the entrance **232** at a secondary inlet pressure (Ps) and secondary inlet temperature (Ts). The anode gas recirculation composition **226** (m$_{\_RC}$) may have water with a mass fraction x$_{\_H2O\_RC}$. The fuel may enter the anode **204** of the fuel cell stack **12** at the anode inlet manifold **404.**

In the illustrated embodiment, there may be two entrainment ratios to consider, the entrainment ratio of the venturi or ejector **230** (ER$_{\_EES}$) and the entrainment ratio of the system (ER):

$$ER_{\_EES} = m_{\_RC}/ m_{\_H2\_EP} \qquad (7)$$

$$ER = m_{\_RC}/ m_{\_H2\_P} \qquad (8)$$

The by-pass valve or flow restriction **410** may be operated to achieve the excess fuel ratio ($\lambda_{H2}$). The by-pass valve or flow restriction **410** may be completely open, completely closed, or may be opened but not completely opened. The opening of the by-pass valve or flow restriction **410** may depend on the excess fuel ratio ($\lambda_{H2}$) or the entrainment ratio of the system (ER) or the entrainment ratio of the venturi or ejector **230** (ER$_{\_EES}$).

In one embodiment, the fuel cell system **10/13** may not comprise a venturi or an ejector **230.** In some embodiments, the fuel cell system **10/13** may comprise a mixing manifold instead of venturi or an ejector **230.** The primary flow stream **202/420** and the recirculation flow stream **226** may mix in the mixing manifold to form the flow stream **222.**

The fuel cell system **10/13** may comprise more than one venturi or ejector **230** in a parallel or series configuration. The operation of the more than one venturi or ejector **230** in a parallel or series configuration may be determined based on the entrainment ratio of the system (ER) or the entrainment ratio of the venturi or ejector **230** (ER$_{\_EES}$). Determining the operation of the more than one venturi or ejector **230** in a parallel or series configuration may comprise determining if all or some of the venturi or ejector **230** in a parallel or series configuration are required to operate, and/or determining the order of the operation of the more than one venturi or ejector **230** in a parallel or series configuration.

The excess fuel ratio ($\lambda_{H2}$) or the entrainment ratio of the system (ER) or the entrainment ratio of the venturi or ejector **230** (ER$_{\_EES}$) may be determined by using physical or virtual sensing systems or methods. In some embodiments, one or more controller **239** may be used for monitoring and/or controlling the physical or virtual temperature sensors **262** or pressure sensors **263.**

In the fuel cell system **10/13,** in order to determine when the recirculation pump or blower **220** needs to be used to provide additional support to the venturi or ejector **230,** the entrainment ratios (ER, ER$_{\_EES}$) need to be accurately estimated. If the entrainment ratio is estimated, use of the recirculation pump or blower **220** may be initiated when the fuel cell system **10/13** approaches the operating condition where the venturi or ejector **230** is expected to be near its operational limit. The use of the recirculation pump or blower **220** may be initiated when the operating current density is less than about 0.8 A/cm$^2$ and/ or at the temperatures or pressures associated with a current density less than about 0.8 A/cm$^2$.

If the fuel cell system **10/13** is operating under transient conditions, the operating current density for initiating use of the recirculation pump or blower **220** may be different than if the fuel cell system **10/13** is operating at steady state conditions. For example, if the fuel cell system **10/13** is operating at about 0.8 A/cm$^2$ under transient conditions, the system may temporarily operate at about 1.5 bara pressure instead of about 2.5 bara pressure and at about 75 °C instead of about 85 °C. If the recirculation pump or blower **220** may need to be turned on at about 0.8 A/cm$^2$ under steady state conditions, the recirculation pump or blower **220** may need to be initiated at about 1 A/cm$^2$ if the fuel cell system **10/13** is operating under transient conditions.

The excess fuel ratio ($\lambda_{H2}$) may be estimated and used as feedback to blower controls **229** when the fuel cell system **10/13** is engaging the recirculation pump or blower **220,** so that the parasitic load associated with running the recirculation pump or blower **220** may be minimized.. The excess fuel ratio ($\lambda_{H2}$) may be estimated and used as feedback to a blower controller when the system is engaging the recirculation pump or blower **220,** so that the speed of the recirculation pump or blower **220** may be altered. The excess fuel ratio ($\lambda_{H2}$) may be estimated and used as feedback to a by-pass valve controller **449** or to an ejector controller **239.**

In one embodiment, use of physical or virtual sensing systems or methods may result in uncertainty in the measured entrainment ratio (ER). In some embodiments, the physical or virtual sensing systems or methods may comprise temperature sensors **262** and/or pressure sensors **263**. To protect for uncertainty in the measured entrainment ratio (ER), the concept of a nominal entrainment ratio ($ER_{NOM}$) and minimum entrainment ratio ($ER_{MIN}$) may be used.

$$ER_{NOM} = ER_{MIN} + Z\sigma_{\_ER} \qquad (9)$$

Z gives a statistical level of confidence that the excess fuel ratio ($\lambda_{H2}$) will be above the minimum required excess fuel ratio ($\lambda_{H2}$) or at target excess fuel ratio ($\lambda_{H2}$) a when the nominal entrainment ratio ($ER_{NOM}$) is measured for given population standard deviation of $\sigma_{\_ER}$. If the entrainment ratio (ER) measured is equal to the nominal entrainment ratio ($ER_{NOM}$), the recirculation pump or blower **220** may need to be used to provide additional support to the venturi or ejector **230.** If Z is equal to about 2.05, there would 98% confidence that the excess fuel ratio ($\lambda_{H2}$) will be above the minimum required excess fuel ratio ($\lambda_{H2}$). The systems and methods used to measure the nominal entrainment ratio ($ER_{NOM}$) and excess fuel ratio ($\lambda_{H2}$) may need to have uncertainty of less than about 12%. The ratio of the standard deviation ($\sigma_{\_ER}$) to and minimum entrainment ratio ($ER_{MIN}$) is less than about 12%.

$$\sigma_{\_ER}/ ER_{MIN} \leq 12\% \qquad (10)$$

The mass flow rate (m) of a gas stream may be a function of characteristic pressure loss or pressure differential ($\Delta P$) across the element (e.g., fuel stack **12**, recirculation pump or blower **220**) through which the gas stream is flowing. In some embodiments, pressure sensors **263** may be used to determine a pressure differential ($\Delta P$) across the element (e.g., fuel stack **12**, recirculation pump or blower **220**). The calculated pressure differential ($\Delta P$) may be used to determine the flow rates of the primary flow stream **202** and of the recirculation flow stream **226.** The density (p) of the gas stream may be estimated based on the pressure (P) in the gas stream, the temperature (T) of the gas stream and average gas constant (R) of the gas stream. The gas stream may be the primary flow stream **202** or the recirculation flow stream **226** in the fuel cell system **10/13**. The gas stream may be the primary flow stream **420** through the venturi or ejector **230** or the flow stream **430** through the by-pass valve or flow restriction **410**, or the recirculation flow stream **226** in the fuel cell system **10/13**.

Referring back to **FIGS. 3** and **4**,

$$m_{\_AIM} = f(\Delta P_{STACK,} \rho_{\_AIM}) \qquad (11)$$

$m_{\_AIM}$ is the mass flow rate at the anode inlet manifold **404** or anode inlet **212** of the fuel cell system **10/13**. $m_{\_AIM\_TARGET}$ is the target mass flow rate at the anode inlet manifold **404** or anode inlet **212** of the fuel cell system **10/13**. $\rho_{\_AIM}$ is the density of the gas stream at the anode inlet manifold **404** or anode inlet **212**.

The mass flow rate of fuel in the primary flow stream **202/420** ($m_{\_H2\_P}$, $m_{\_H2\_EP}$) into the inlet of the ejector **230** may be estimated based on the operating current density, the primary nozzle inlet pressure ($P_O$), and/or primary nozzle inlet temperature (To). The mass fraction of water in the recirculation flow ($x_{\_H2O\_RC}$) may be estimated based on the fuel cell stack **12** outlet pressure, fuel cell stack **12** outlet temperature and/or the relative humidity in the recirculation flow stream **226**. In other embodiments, the mass fraction of nitrogen in the recirculation flow ($x_{N2\_RC}$) may be a fixed value or may be estimated based on the time since the last purge event. The entrainment ratio (ER) may be determined as:

$$ER + 1 = m_{\_AIM} / m_{\_H2\_P} \qquad (12)$$

In one embodiment, the target mass flow rate at the anode inlet manifold **404** or anode inlet **212** ($m_{\_AIM\_TARGET}$) may be a function of other parameters that are equivalent to the primary flow stream **202/420** ($m_{\_H2\_P}$, $m_{\_H2\_EP}$) or to the fuel consumption rate, such as operating current density.

$$m_{\_AIM\_TARGET} = f(m_{H2\_P}) \qquad (13)$$

When the mass flow rate at the anode inlet manifold **404** or anode inlet **212** ($m_{\_AIM}$) is less than the target mass flow rate at the anode inlet manifold **404** or anode inlet **212** ($m_{\_AIM\_TARGET}$), the fuel cell system **10/13** may initiate the use of the recirculation pump or blower **220**. When the fuel cell system **10/13** initiates the use of the recirculation pump or blower **220**, the fuel cell system **10/13** may be in a boosted by blower state. When the fuel cell system **10/13** is in the boosted by blower state, the fuel cell system **10/13** may adjust the speed of the recirculation pump or blower **220** such that the anode inlet manifold **404** or anode inlet **212** ($m_{\_AIM}$) is greater than the target mass flow rate at the anode inlet manifold **404** or anode inlet **212** ($m_{\_AIM\_TARGET}$).

A controller **459** may control the mass flow rate at the anode inlet manifold **404** or anode inlet **212** ($m_{\_AIM}$). In some embodiments, the controller **459** may determine the mass flow rate at the anode inlet manifold **404** or anode inlet **212** ($m_{\_AIM}$) to be a function of the mass flow rate of fuel in the primary flow stream **202/420** ($m_{\_H2\_P}$, $m_{\_H2\_EP}$) into the inlet of the ejector **230**.

The mass flow rate at the anode inlet manifold **404** or anode inlet **212** ($m_{\_AIM}$) may be determined as:

$$Vdot_{\_AIM} = A_{\_AIM} \times \Delta P_{AIM} \qquad (14)$$

$$m_{\_AIM} = Vdot_{\_AIM} \times \rho_{\_AIM} \qquad (15)$$

$$A_{\_AIM} = f(P_{AIM}, T_{AIM}, i_{\_AIM}) \qquad (16)$$

$Vdot_{\_AIM}$ is the volumetric flow rate at anode manifold inlet of the fuel cell system **10/13**, $A_{\_AIM}$ is a transfer function, $\Delta P_{AIM}$ is the pressure differential across the anode inlet manifold **404** or anode inlet **212**.

The correlation for the transfer function ($A_{\_AIM}$) may be developed for nominal steady state operating conditions at an operating current density ($i_{\_AIM}$). In some embodiments, additional fidelity may be added to correct for off-nominal conditions such as transient conditions. The additional fidelity may be achieved by using a modified transfer function under highly transient conditions, where the modified transfer function accounts for the system dynamics.

The uncertainty associated with the volumetric flow rate at anode manifold inlet ($Vdot_{\_AIM}$) of the fuel cell system **10/13** may be dominated by the ability to measure the pressure differential across the anode inlet manifold **404** or anode inlet **212** ($\Delta P_{AIM}$). The transfer function ($A_{\_AIM}$) may be linear and uncorrelated to the pressure differential across the anode inlet manifold **404** or anode inlet **212** ($\Delta P_{AIM}$).

The uncertainty associated with pressure sensors **263** may depend on the use of single point pressure sensors **265** or differential pressure sensors **267**. In one embodiment, absolute pressure sensors **269** may be used at the air side and at the cathode side. The target bias pressure ($P_{BIAS}$) and/or thresholds associated with standard errors may vary with operating conditions. The target bias pressure ($P_{BIAS}$) and/or thresholds associated with standard errors may be a function of gross current and/or current density of the fuel cell system **10/13**.

Inaccurate pressure measurements at the anode **204** and the cathode **208** may result in error propagation. In one embodiment, single point pressure sensors **265** may be used at the anode inlet **212** and/or the cathode inlet **216**. For example, if single point pressure sensors **265**, such as an anode side pressure sensor and a cathode side pressure sensor, are used to measure the pressure at the anode inlet **212** (PI) and cathode inlet **216** (P2), the pressure differential ($\Delta P$) across the anode **204** and the cathode **208** is determined as follows and further described in Table 1.

$$\Delta P = P1 - P2 = P_{AIM} - P_{\_CATHODE} \qquad (17)$$

| Table 1 | | | | one sigma | | standard error (one sigma) | |
|---|---|---|---|---|---|---|---|
| P1 = | 2.50 | [bara] | $X_{p1}$ = | 2.4% | | 0.06 | [bara] |
| P2 = | 2.25 | [bara] | Xp2 = | 2.7% | | 0.06 | [bara] |
| $\Delta P$ = | 0.25 | [bara] | $\sigma_{\Delta P}$ = | 0.085 | [bara] | | |
| | | | | | | | |

The uncertainty is about 2% of a full scale pressure of 3.0 bara. Since the pressures measured (e.g., P1 and P2) are less than the full scale of 3.0 bara (e.g., 2.5 bara and 2.25 bara), the uncertainty is higher than 2% (e.g., 2.4% and 2.7%). As shown in **Table 1,** even if the single point pressure sensors **265** are relatively accurate, error propagation impacts the accurate measurement of the pressure differential ($\Delta P$). In this instance, the single point standard error is 0.085 bara. Thus, there may be about a 34% error in the measurement of the pressure differential ($\Delta P$).

Such error in measuring the single point pressures at the anode **204** (e.g., at the anode inlet **212**) and the cathode **208** (e.g., at the anode inlet **216**), and hence the error in accurately determining the pressure differential ($\Delta P$) between the anode **204** side and the cathode **208** side, could exist from the beginning of use of the fuel cell stack **12** comprising the anode **204** and the cathode **208**. Alternatively, the error in measuring the single point pressures at the anode **204** (e.g., at the anode inlet **212**) and the cathode **208** (e.g., at the cathode inlet **216**) may occur with pressure sensor **263** aging and/or drift over time.

If the error in the pressure measurements, as described in the example above is about 34%,

$$(\sigma\_ Vdot_{\_AIM})/ (Vdot_{\_AIM}) = (\sigma\_ \Delta P_{\_AIM})/( \Delta P_{\_AIM}) = 34\% \quad (18)$$

In one embodiment,

$$\rho_{\_AIM} = P_{AIM}/ (R_{\_AIM} \text{ x } T_{AIM}) \qquad (19)$$

$R_{\_AIM}$ is the gas constant in the anode inlet manifold **404** or anode inlet **212**, $\rho_{\_AIM}$ is the density in the anode inlet manifold **404** or anode inlet **212**, $T_{AIM}$ is the temperature in the anode inlet manifold **404** or anode inlet **212**.

The error associated with the molecular weight of the of the gas stream in the anode inlet manifold **404** or anode inlet **212** ($\sigma_{\_MW}$) depends on the error associated with the mole fraction of hydrogen in the gas stream at the anode inlet manifold **404** or anode inlet **212** ($\sigma_{\_Y\_H2}$), the molecular weight of hydrogen ($MW_{\_H2}$) is about 2.0156 g/mole, and the molecular weight of water ($MW_{\_H2O}$) is about 18.105. If the error associated with the mole fraction of hydrogen in the gas stream at the anode inlet manifold **404** or anode inlet **212** ($\sigma_{\_Y\_H2}$) is about 0.02, the error associated with the molecular weight of the of the gas stream in the anode inlet manifold **404** or anode inlet **212** ($\sigma_{\_MW}$) is:

$$\sigma_{\_MW} = \sigma_{\_Y\_H2} (MW_{\_H2O} - MW_{\_H2}) = 0.32 \qquad (20)$$

If the nominal molecular weight ($MW_{\_AIM\_NOM}$) is about 10, the error associated with the universal gas constant in the anode inlet manifold **404** or anode inlet **212** ($\sigma_{\_R\_AIM}$) is:

$$\sigma_{\_R\_AIM} / R_{\_AIM} = \sigma_{\_MW} / MW_{\_AIM} = 3.2\% \qquad (21)$$

$MW_{\_AIM}$ is the molecular weight of the gas stream in the anode inlet manifold **404** or anode inlet **212**.

The nominal molecular weight of the gas stream at the anode inlet manifold **404** or anode inlet **212** ($MW_{\_AIM\_NOM}$) is:

$$MW_{\_AIM\_NOM} = y_{\_H2\_AIM} \times (MW_{\_H2} - MW_{\_H2O}) + MW_{\_H20} \quad (22)$$

$y_{\_H2\_AIM}$ is the mole fraction of hydrogen in the gas stream at the anode inlet manifold **404** or anode inlet **212**.

The error associated with determining the density in the anode inlet manifold **404** or anode inlet **212** ($\sigma_{\_\rho\_AIM}$) depends on the error associated with the universal gas constant in the anode inlet manifold ($\sigma_{\_R\_AIM}$), the error associated with the pressure in the anode inlet manifold **404** or anode inlet **212** ($\sigma_{\_P\_AIM}$), and the error associated with the temperature in the anode inlet manifold **404** or anode inlet **212** ($\sigma_{\_T\_AIM}$).

$$\sigma_{\_\rho\_AIM} / \rho_{\_AIM} = 4\% \quad (23)$$

$$\sigma_{\_m\_AIM} / m_{\_AIM} = 34\% \quad (24)$$

$$ER + 1 = m_{\_AIM} / m_{\_H2\_P} \quad (25)$$

If the nominal mole fraction of hydrogen in the gas stream at anode inlet manifold **404** or anode inlet **212** ($y_{\_H2\_AIM\_NOM}$) is about 0.5, and the error associated with the nominal mole fraction of hydrogen in the gas stream at anode inlet manifold **404** or anode inlet **212** ($\sigma_{\_Y\_H2}$) is about 0.02, the ER is equal to about 2, and the error associated with determining the ER is $\sigma_{\_ER}$,

$$\sigma_{\_ER} / ER = 52\% \quad (26)$$

In one embodiment, an alternate method may be used to calculate or determine the entrainment ratio (ER) from the mass flow rate through the anode inlet manifold **404** or anode inlet **212** ($m_{\_AIM}$).

$$ER + 1 = m_{\_AIM} / m_{\_H2\_P} \quad (27)$$

$$ER = [\lambda_{H2} - 1] / [(1 - x_{\_H2O\_RC} - x_{\_N2\_RC})] \quad (28)$$

There may be additional error propagation if this method is used to determine the entrainment ratio (ER). For example, considering an uncertainty greater than about 50% in the determination of the mass flow rate through the anode inlet manifold **404** or anode inlet **212** ($m_{\_AIM}$),

$$\sigma_{\_ER} / ER > 50\% \times (ER+1)/ER \quad (29)$$

$$\text{If } ER = 2, \quad \sigma_{\_ER} / ER > 75\% \quad (30)$$

Using the pressure differential ($\Delta P$) across the anode **204** and the cathode **208** depends on highly accurate pressure measurements. In some embodiments, to ensure an uncertainty of 12% or less in the measurements of the nominal entrainment ratio ($ER_{NOM}$) and excess fuel ratio ($\lambda_{H2}$), the pressure differential ($\Delta P$) measurement may need an uncertainty of less than about 10. The absolute pressure sensors **269** may need an uncertainty of less than 0.5%. In a preferential embodiment, pressure differential sensors **267** may be used instead of absolute pressure **269** sensors.

One or more pressure differential sensors **267** that measure the pressure difference between two or more locations in the anode recirculation loop **224** may be used in addition to or instead of the single point pressure sensors **265** at the anode **204** and the cathode **208**. The pressure differential sensor **267** may be designed to control recirculation flow stream **226** in the anode recirculation loop **224**.

The differential pressure sensor **267** with an uncertainty of less than about 10% is required such that the blower controller may be able to determine when operate the recirculation pump or blower **220** or the speed at which to operate the recirculation pump or blower **220**. Alternatively, or additionally, the differential pressure sensor **267** with an uncertainty of less than about 10% is required such that the by-pass valve controller may be able to determine the operation of the by-pass valve or flow restriction **410**.

. Alternatively, or additionally, the differential pressure sensor **267** with an uncertainty of less than about 10% is required such that the ejector controller may be able to determine when operation of one or more venturi or ejectors **230**. The pressure differential sensors **267** may have an uncertainty of about 0.3% to about 0.5%, about 0.5% to about 1%, about 1% to about 5%, or about 5% to about 10%, including any percentage or range comprised therein.

The pressure sensors **263** may be calibrated in-situ. The flow rate may be estimated based on calibrated pressure sensors. The pressure sensors **263** may be used to measure the pressure differential ($\Delta$P) under conditions where the primary flow stream **202/420** and entrained mass flow **226** rates are known, the pressure sensors **263** may be calibrated to the known flow rates, and then used to make future measurements. The pressure sensor **263** measurements may be compared to an expected measurement under the known operating conditions, any offset may be recorded and used to correct future measurements.

The pressure sensors **263** may be used to measure the pressure differential ($\Delta$P) under steady state conditions at high operating current density when the venturi or ejector **230** is operating under geometrically constrained conditions. The pressure sensors **263** may be used to measure the pressure differential ($\Delta$P) under steady state conditions at low operating current density when the recirculation pump or blower **220** is operating at a known speed. In each of the known conditions, a relative offset in the pressure differential ($\Delta$P) may be recorded and used to correct any future measurements made with the same pressure sensors **263**. In some embodiments, the pressure differential ($\Delta$P) may be compared to an expected measurement under the known operating conditions, any offset may be recorded and used to correct future measurements.

The target mass flow rate at the anode inlet manifold **404** or anode inlet **212** of the system (m $_{AIM\_TARGET}$) may be estimated or developed based on the amount of the fresh fuel **202** that enters the venturi or ejector **230** at the entrance **234** in the fuel cell system **10/13**. The target mass flow rate (m $_{AIM\_TARGET}$) at the anode inlet manifold **404** or anode inlet **212** of the fuel cell system **10/13** may be estimated or developed based on the amount of the fresh fuel **320** that enters the venturi or ejector **230** at the entrance **234** in the fuel cell system **10/13**.

The mass flow rate the fresh fuel **202, 420** may be estimated from the pressure differential ($\Delta$P) and may be used to determine when the recirculation pump or blower **220** may be turned on and/or if the speed of the recirculation pump or blower **220** needs to be adjusted In some embodiments, if the uncertainty in the entrainment calculation is more than about 12% or if the differential pressure sensor **267** with an uncertainty of more than about 10%, the flow rate estimated from the pressure differential ($\Delta$P) may be used by one or more controller(s) such as the blower controller **229**, the by-pass valve controller **449**, or the ejector controller **239** as a diagnostic tool. In some embodiments, the blower controller **229**, the by-pass valve controller **449**, or the ejector controller **239** may be the same.

In one embodiment, the entrainment ratio (ER) may be determined based on the temperature at the mixing points of different gas streams in the fuel cell system **10/13**. Under steady state conditions and with no heat loss, ER is:

$$ER = -C_{P\_A}\Delta T_A / C_{P\_B}\Delta T_B \quad (31)$$

$C_{P\_A}$ is the specific heat at constant pressure of the primary flow stream **202/420**, $\Delta T_A$ is the change in temperature of the primary flow stream **202/420** before and after mixing, $C_{P\_B}$ is the specific heat at constant pressure of the recirculation flow stream **226**, and $\Delta T_B$ is the change in temperature of the recirculation flow stream **226** before and after mixing.

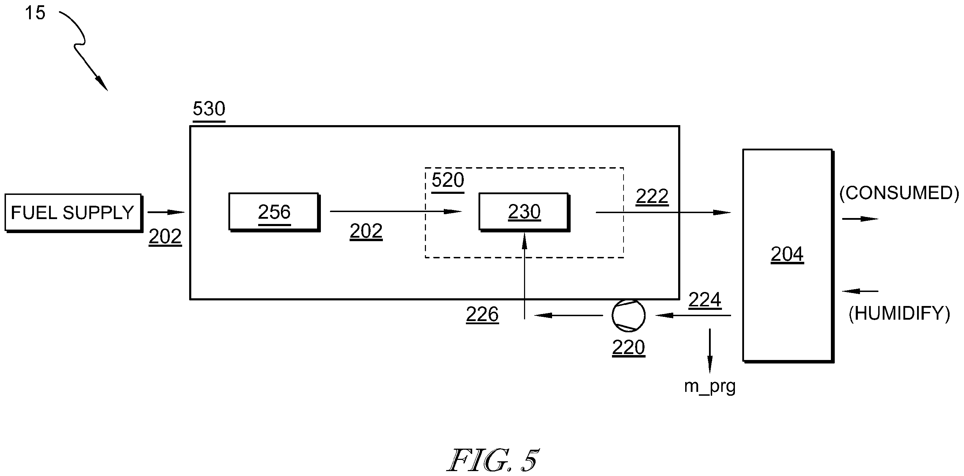

The entrainment ratio (ER) or the excess fuel ratio ($\lambda_{H2}$) may be determined by estimating the average heat capacity of the primary flow stream **202/420** and the average heat capacity of the recirculation flow stream **226**. The primary flow stream **202** and the recirculation flow stream **226** in the fuel cell system **10/13** may undergo adiabatic mixing. In some embodiments, as illustrated in **FIG. 5**, a fuel cell system **15** may comprise an energy balance around box **520,** where the flow streams **202** and **226** mix to form the flow stream **222**. In other embodiments, the fuel cell system may comprise an energy balance around box **530,** where the flow streams **202** and **226** mix to form the flow stream **222**. Physical or virtual temperature sensors **262** may be used to make temperature measurements around the mixing points.

If the energy balance is comprised across box **520,** $\Delta T_A$ is the change in temperature of the primary flow stream **202** across the venturi or ejector **230**, $C_{P\_B}$ is the specific heat at constant pressure of the recirculation flow stream **226,** and $\Delta T_B$ is the change in temperature of the recirculation flow stream **226** across the venturi or ejector **230**. The venturi or ejector **230** acts as the mixing point. If the energy balance is comprised across box **530,** $\Delta T_A$ is the change in temperature of the primary flow stream **202** across the mechanical valve **250** and the venturi or ejector **230**. $C_{P\_B}$ is the specific heat at constant pressure of the recirculation flow stream **226,** and $\Delta T_B$ is the change in temperature of the recirculation flow stream **226** across the venturi or ejector **230**. The mechanical valve **250** and the venturi or ejector **230** acts as the mixing point. In some embodiments, there may be minimal temperature loss in the primary flow stream **202** across the mechanical valve **250**. Thus, since the flow through the mechanical regulator **250** may be isothermal, the same energy balance may be used around boxes **520** and **530**. A correction term may be added to account for heat losses based on temperature difference between the surface of the venturi or ejector **230** and environmental temperature around the venturi or ejector **230**.

In one embodiment, if the energy balance around box **520/530** may be assumed to adiabatic and be determined as:

$$m_{\_A} \times h_{\_A\_I} + m_{\_B} \times h_{\_B\_I} = m_{\_C} \times h_{\_C\_O} \qquad (32)$$

$m_{\_A}$ is the mass flow rate of the primary flow stream **202**, $h_{\_A\_I}$ is the enthalpy of the primary flow stream **202** at the inlet **234** of the venturi or ejector **230**, $m_{\_B}$ is the mass flow rate of the recirculation flow stream **226**, $h_{\_B\_I}$ is the enthalpy of the recirculation flow stream **226** at the inlet **232** of the venturi or ejector **230**, m c is the mass flow rate of the flow stream **222** exiting the venturi or ejector **230**, $h_{\_C\_O}$ is the enthalpy of the flow stream **222** at the exit **238** of the venturi or ejector **230**. Assuming the enthalpy of mixing is zero,

$$m_{\_A} \times h_{\_A\_I} + m_{\_B} \times h_{\_B\_I} = m_{\_A} \times h_{\_A\_O} + m_{\_B} \times h_{\_B\_O} \qquad (33)$$

$h_{\_A\_O}$ is the enthalpy of the primary flow stream **202** at the exit **238** of the venturi or ejector **230**, $h_{\_B\_O}$ is the enthalpy of the recirculation flow stream **226** at the exit **238** of the venturi or ejector **230**.

The entrainment ratio (ER) is:

$$ER = m_{\_A} / m_{\_B} = -(h_{\_A\_O} - h_{\_A\_I}) / (h_{\_B\_O} - h_{\_B\_I}) \qquad (34)$$

The primary flow **202** may be pure hydrogen, and the enthalpy at the inlet ($h_{\_A\_I}$) and outlet ($h_{\_A\_O}$) may be determined using a look-up table and/or equation. Alternatively, the primary flow **202** may be pure hydrogen, and the enthalpy at the inlet ($h_{\_A\_I}$) and outlet ($h_{\_A\_O}$) may be determined based on the temperature of the primary flow at the inlet ($T_{A\_I}$), temperature of the primary flow at the outlet ($T_{A\_O}$), pressure of the primary flow at the inlet ($P_{A\_I}$), and/or pressure of the primary flow at the outlet ($P_{A\_O}$). In some other embodiments, other variables sufficient to determine the thermodynamic state of the closed system or enclosure being considered. The closed system or enclosure may be the described by box **520**, box **530** or a different enclosure.

The primary flow stream **202** may experience a significant pressure drop through the closed system or enclosure being considered. The static and stagnation temperature may be assumed to be similar. A low flow velocity, with a Mach number less than 0.1 may be assumed. In some embodiments, for the range of inlet and outlet pressures and temperatures, constant heat capacity may be assumed for the primary flow stream **202**.

$$ER = -C_{P\_A} \Delta T_A / \Delta h_{\_B} \qquad (35)$$

$\Delta h_{\_B}$ is the change in enthalpy of the recirculation flow stream **226** stream.

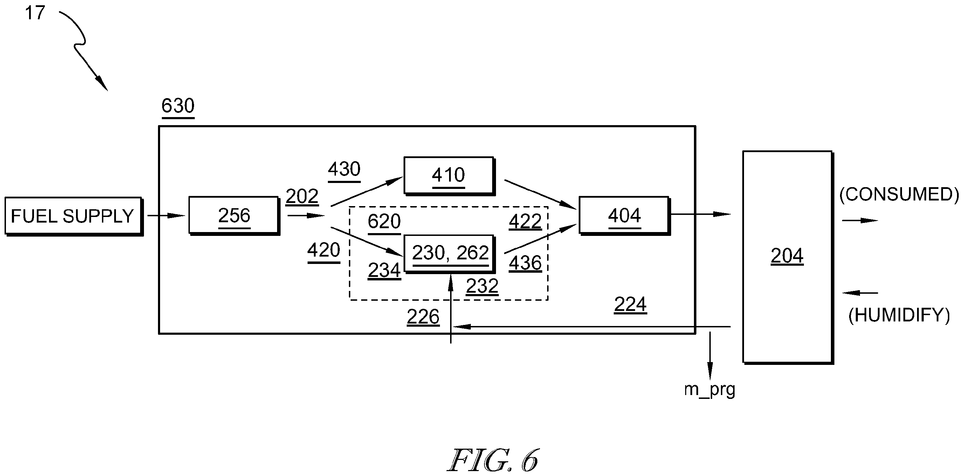

A similar energy balance may be implemented in a fuel cell system **17** comprising a venturi or ejector **230**, sized to support a fraction of primary flow stream **202** (e.g., $H_2$), placed in parallel with a by-pass valve or flow restriction **410**, as shown in **FIG. 6**. If the energy balance is comprised across box **620**, $\Delta T_A$ is the change in temperature of the primary flow stream **420** across the venturi or ejector **230**, $C_{P\_B}$ is the specific heat at constant pressure of the recirculation flow stream **226**, and $\Delta T_B$ is the change in temperature of the recirculation flow stream **226** across the venturi or ejector **230**. The venturi or ejector **230** acts as the mixing point, and flow stream **436** enters the anode inlet manifold **404**. Physical or virtual temperature sensors **262** may be used to make temperature measurements around the mixing point.

If the energy balance is comprised across box **630**, $\Delta T_A$ is the change in temperature of the primary flow stream **202** across the mechanical valve **250**, the by-pass valve or flow restriction **410**, and the venturi or ejector **230**. $C_{P\_B}$ is the specific heat at constant pressure of the recirculation flow stream **226**, and $\Delta T_B$ is the change in temperature of the recirculation flow stream **226** across the venturi or ejector **230**. The mechanical valve **250**, the by-pass valve or flow restriction **410**, the venturi or ejector **230**, and the anode inlet manifold **404** act as the mixing point and flow streams **436, 422** enters the anode inlet manifold **404**.. In some embodiments, there may be minimal temperature loss in the primary flow stream **202** across the mechanical valve **250** and there may be minimal temperature loss in the primary flow stream **430** across the by-pass valve or flow restriction **410**.

The recirculation flow stream **226** may be a multi-component stream hydrogen ($H_2$), water ($H_2O$) and/ other contaminants (e.g., $N_2$). Since the properties of hydrogen and water are substantially different, the change in enthalpy may need to account for the composition of the recirculation flow stream **226**.

The composition of the recirculation flow stream **226** may be estimated by estimating the relative humidity of the recirculation flow stream **226** based on the upstream component, i.e. the fuel cell stack **12.** For example, the relative humidity of the stream exiting the anode side **214** of the fuel cell stack **12** may be estimated from a look-up table based on operating conditions. In some embodiments, the relative humidity at the anode outlet ($RH_{ANODE\_O}$) **214** may be 1.0. The saturated vapor pressure of water ($P_{SAT\_H2O}$) may need to be estimated to determine the composition of the recirculation flow stream **226.** The saturated vapor pressure of water ($P_{SAT\_H2O}$) depends on temperature, and may be obtained from a look-up table or an equation (e.g., Antoine equation).

If the saturated vapor pressure of water ($P_{SAT\_H2O}$) is known, the water molar fraction in the recirculation flow ($y_{\_H2O\_RC}$) is:

$$y_{\_H2O\_RC} = (RH_{ANODE\_O} \times P_{SAT\_H2O})/ P_{ANODE\_O} \qquad (36)$$

$P_{ANODE\_O}$ is the pressure at the anode outlet **214.**

If the recirculation flow stream **226** comprises hydrogen, water and nitrogen, the hydrogen molar fraction in the recirculation flow stream **226** ($y_{\_H2O\_RC}$) is:

$$y_{\_H2\_RC} = 1 - y_{\_H2O\_RC} - y_{\_N2\_RC} \qquad (37)$$

$y_{\_N2\_RC}$ is the nitrogen molar fraction in the recirculation flow stream **226,** and may need to be estimated. Nitrogen ($N_2$) may be a representative contaminant in the anode recirculation loop **224.** The anode recirculation loop **224** may comprise additional or fewer contaminants. In some embodiments, nitrogen ($N_2$) may be the largest contaminant as it may diffuse across the MEA from the cathode side into anode side. In other embodiments, other contaminants present in the fuel may also accumulate in the anode recirculation loop **224.** The other contaminants may be in lower concentration than nitrogen ($N_2$) as fresh hydrogen fuel purity requirements are high.

The nitrogen molar fraction in the recirculation flow stream **226** may be estimated. In some embodiments, the nitrogen molar fraction in the recirculation flow stream **226,** and may be estimated based on a model that estimates the diffusion rate of nitrogen across a membrane in the fuel cell stack **12** and may be based on stack operating conditions. In other embodiments, nitrogen purge may be estimated based on the gas purging rates. The net nitrogen in the recirculation and the nitrogen mole fraction may be estimated based on volume, temperature, and pressure within the anode system.

The nitrogen molar fraction in the recirculation flow stream **226** ($y_{\_N2\_RC}$) may be set to a fixed value. Alternatively, or additionally, the nitrogen molar fraction in the recirculation flow stream **226** ($y_{\_N2\_RC}$) may be set to zero, if the net rate of nitrogen ($N_2$) diffusion from the cathode side to the anode side is expected to be low compared to the gas purging rate. Alternatively, or additionally, the nitrogen molar fraction in the recirculation flow stream **226** ($y_{\_N2\_RC}$) may be set to a fixed high value if it may be desirable to make a conservative estimate of the excess fuel ratio ($\lambda_{H2}$).

The mass fraction ($x_{\_K}$) of the different components of the recirculation flow stream **226** may be determined based on the mole fraction of the different components.

$$MW_{\_B} = \sum y_{\_K} \times MW_{\_K} \; (K \text{ is } H_2O, H_2, N_2) \qquad (38)$$

$$x_{\_K} = y_{\_K} \times MW_{\_K} \qquad (39)$$

$MW_{\_K}$ is the molecular weight of the different components of the recirculation flow stream **226.** $MW_{\_B}$ is the molecular weight of the recirculation flow stream **226.**

In some embodiments, other systems or methods may be used to determine the composition of the recirculation flow stream **226.** The other systems and/or methods may include but are not limited to humidity sensors and/or other analyzers may be used to determine the composition of the recirculation flow stream **226.**

After the composition of the recirculation flow stream **226,** the enthalpy change in the composition of the recirculation flow stream **226** may be estimated using the method similar to the one described above for pure hydrogen in the primary flow stream **202/420.** In some embodiments, for the range of inlet and outlet pressures and temperatures, constant heat capacity may be assumed for the recirculation flow stream **226.**

$$C_{P\_B} = \sum x_{\_K} \times C_{P\_K} \; (K \text{ is } H_2O, H_2, N_2) \qquad (40)$$

$$R_B = R_{UGS} / MW_B \quad (41)$$

$$\Delta h_B = C_{P\_B} \times (T_{B\_O} - T_{B\_I}) \quad (42)$$

$R_{UGS}$ is the universal gas constant. In one embodiment, if the closed enclosure being considered is **292**, $T_{B\_I}$ is the temperature of the recirculation flow stream **226** at the inlet **232** and $T_{B\_O}$ is temperature of the recirculation flow stream **226** at the exit **238**.

The rate of change of primary fuel supply temperature (Tcv) may be determined by ambient conditions, which may vary slowly compared to the thermal dynamics of the venturi or ejector **230**. In some embodiments, if the fuel supply temperature (Tcv) is pre-conditioned, the rate of change of primary fuel supply temperature (Tcv) may decrease. It may be preferable to maximize the temperature change of the primary flow stream **202/420** in the venturi or ejector **230**. The design configurations may enable the maximizing of the temperature change of the primary flow stream **202/420** in the venturi or ejector **230**. The primary flow stream **202/420** may be pre-conditioned by a low temperature coolant (e.g., coolant at a temperature below about 50 °C). The temperature of the recirculation flow stream **226** may be equal to the coolant inlet temperature. The coolant inlet temperature may be about 5 °C to 10 °C lower than the target cathode outlet operating temperature of about 70 °C to about 80 °C. The fuel cell **20** or fuel cell stack **12** may be configured such that anode gas stream co-flows with the coolant such that there is higher change in temperature across the flow streams.

The rate of change of the inlet temperature of the recirculation flow stream **226** ($T_{B\_IN}$) may be controlled by the fuel cell stack anode outlet **214** temperature. The dynamics of change in primary fuel supply temperature (Tcv) may be slow compared to the thermal dynamics of the venturi or ejector **230**. The estimation based on steady state adiabatic analysis may be sufficient to estimate the entrainment ratio (ER).

The approach described above may be implemented for fuel cell systems **10, 13, 15, 17** used in range extender applications, with pseudo-steady state operation, i.e. instances when operating conditions vary slowly such that dynamic effects are low. Effect of heat losses and transient behavior may be required to be implemented to estimate the entrainment ratio (ER). The venturi or ejector **230** may be insulated or may employ a heat shield to prevent heat loss.

In one embodiment, a correction term may be used to account for the effect of heat loss to the environment.

$$0 = m_A C_{P\_A} \Delta T_A + m_B C_{P\_B} \Delta T_B + Q2A \quad (43)$$

$$Q2A = UA(T_{EJJ} - T_{AMB}) \quad (44)$$

Q is the heat transferred to the venturi or ejector **230**, U is the heat transfer coefficient, A is the effective area of the venturi or ejector **230**, $T_{EJJ}$ is the temperature of the venturi or ejector **230**, $T_{AMB}$ is the ambient temperature.

$$ER = -C_{P\_A}\Delta T_A / C_{P\_B}\Delta T_B - UA \, \Delta T_{AMB} / m_A C_{P\_B}\Delta T_B \quad (45)$$

$UA \, \Delta T_{AMB} / m_A C_{P\_B}\Delta T_B$ is the correction term.

The entrainment ratio is determined to be a sum of the nominal entrainment ratio ($ER_{NOM}$) and a entrainment ratio correction ($ER_{\_CORR}$),

$$ER - ER_{\_NOM} + ER_{\_CORR} \quad (46)$$

$$ER_{\_CORR} = (UA / m_A C_{P\_B}) \times ((T_{EJJ} - T_{AMB})/(T_C - T_B)) \quad (47)$$

$$ER_{\_CORR} = f(m_A, C_{P\_B}, T_C, T_A, T_B \, T_{AMB}, UA) \quad (48)$$

$T_A$ is the temperature of the primary flow stream **202, 420** at the venturi or ejector **230** inlet **234**, $T_B$ is the temperature of the recirculation flow stream **226** at the venturi or ejector **230** inlet **232**, Tc is the temperature of the gas stream at the venturi or ejector **230** exit **238**. The entrainment ratio correction ($ER_{\_CORR}$) may be calibrated a priori against one or more of the parameters that it depends on. The factor $UA/m_A C_{P\_B}$ may be estimated using correlation for the heat transfer coefficient (U). Effective external surface area of the venturi or ejector **230** for heat transfer (A) may be calculated based on the dimensions of the venturi or ejector **230.** The mass of the primary flow stream **220/ 420** ($m_A$) and the effective heat capacity of the recirculation flow stream **226** ($C_{P\_B}$) may be determined as described above.

$UA/m_A C_{P\_B}$ may be estimated for a given operating current density. In some embodiments, the temperature ratio may be estimated. If the ambient temperature ($T_{AMB}$) is about the same as the temperature of the recirculation flow stream **226** ($T_B$), and the temperature of the venturi or ejector **230** ($T_{EJJ}$) is about the same as the temperature of the gas stream at the venturi or ejector **230** exit **238** (Tc),

$$(T_{EJJ}-T_{AMB})/ (T_C - T_B) \sim (T_C - T_B)/(T_C - T_B) = 1 \qquad (49)$$

$$ER_{\_CORR} = (UA/ m_A C_{P\_B}) \times 1 \qquad (50)$$

If for the heat transfer coefficient (U), for free convection is about 10 W/m$^2$/K, and $UA/ m_A C_{P\_B}$ is determined to be about 0.0001 for a load fraction of about 0.20, the entrainment ratio correction ($ER_{\_CORR}$) may be about 0.0001. If the entrainment ratio correction ($ER_{\_CORR}$) is about 0.0001, the entrainment ratio correction ($ER_{\_CORR}$) may be within the uncertainty range of temperature sensors **262.** In some embodiments, under normal operating conditions where there is no forced convection over the venturi or ejector **230,** the need to correct for losses to the ambient may be low.

In one embodiment, under a cold start condition, the ambient temperature ($T_{AMB}$) may be about 0 °C. If the temperature of the gas stream at the venturi or ejector **230** exit **238** (Tc) is about 85 °C, and the temperature of the recirculation flow stream **226** ($T_B$) is about 60 °C,

$$(T_{EJJ}-T_{AMB})/ (T_C - T_B) = (85-0) / (85-60) \sim 3.4 \qquad (51)$$

If $UA/ m_A C_{P\_B}$ is determined to be about 0.0001 for a load fraction of about 0.20, the entrainment ratio correction ($ER_{\_CORR}$) may be about 0.0001 $\times$ 3.4 ~ 0.005. If the entrainment ratio correction ($ER_{\_CORR}$) is about 0.005, the entrainment ratio correction ($ER_{\_CORR}$) may be within the uncertainty range of temperature sensors **262.**

In one embodiment, if the fuel cell system **10/13** is operating under transient conditions, the steady state calibration/ correction described above may be estimated for the transient response because any difference due to the system operating under transient conditions may be minimal. In other embodiments, a dynamic model that accounts for the transient operation and incorporates the heat capacity of the different components, the mass flow rates of the different flow streams, the heat capacity of the different fluids, heat transfer coefficients, and/or available volume with the venturi or ejector **230** may be implemented.

In one embodiment, the transient model may be a first order approximation. In some embodiments, the transient model may be a second order approximation. In some other embodiments, the transient model may be a simplified first order approximation that may be implemented because a single time constant may dominate the dynamics. In some embodiments any physical or virtual sensors **262, 263** used to measure pressure or temperature may be specified so that the dynamics associated with the sensors **262, 263** are faster than the transient dynamics of the fuel cell system **10/13.**

In one embodiment, the uncertainty associated with the temperature sensors **262** may need to less than about 2 °C to determine a usable estimate of the entrainment ratio (ER). The normalized temperature sensor uncertainty is the absolute uncertainty divided by the expected change in temperature across the mixing point. In some embodiments, the absolute uncertainty associated with the temperature measurements may need to be less than about 0.5 °C to ensure that the normalized temperature sensor uncertainty in the estimation of the entrainment ratio is less than about 12%. In some embodiments, the normalized temperature sensor uncertainty may range from about 0.3% to about 0.5%, from about 0.5% to about 1%, from about 1% to about 5%, or from about 5% to about 10%, including any percentage or range comprised therein.

In one embodiment, if the uncertainty in the entrainment calculation is more than about 12% or if the uncertainty associated with the temperature sensors **262** is more than about 0.5 °C, the method of determining the entrainment ratio (ER) based on the temperature mixing of different gas streams in the fuel cell system **10/13** may be used by one or more controller(s) such as the blower controller **229,** the by-pass valve controller **449,** or the ejector controller **239** as a diagnostic tool. In some embodiments, the blower controller **229,** the by-pass valve controller **449,** or the ejector controller **239** may be the same.

Model based methods may be used to estimate the entrainment ratio (ER) and to determine the nominal speed of the recirculation pump or blower **220.** Ejector models ($ER_{\_EJC\_MODEL}$) and/or blower models ($ER_{\_BLW\_MODEL}$) may be used to estimate the nominal performance of the venturi or ejector **230** and recirculation pump or blower **220** respectively.

Blower models (ER $_{BLW\_MODEL}$) may be developed to determine open loop speed targets for the recirculation pump or blower **220** used in the fuel cell system **10/13**. Blower models (ER_BLW_MODEL) may be used in feedback loops based on different measured parameters.

Amodel of the venturi or ejector **230** (ER $_{EJC\_MODEL}$) may be used to estimate the capability of the venturi or ejector **230** at a given operating condition. When the entrainment ratio (ER) predicted by the venturi or ejector **230** (ER $_{EJC\_MODEL}$) is less that the nominal entrainment ratio (ER$_{NOM}$), the fuel cell system **10/13** may initiate the recirculation pump or blower **220** and transition to a boosted by blower state.

The pressure lift capability of the venturi or ejector **230** ($\Delta P_{LIFT\_EJC}$) may be estimated using the model of the venturi or ejector **230** (ER $_{EJC\_MODEL}$). The target pressure lift of the recirculation pump or blower **220** ($\Delta P_{BLWR\_TRGT}$) may be estimated as the difference between the pressure lift ($\Delta P_{LIFT}$) required to overcome the pressure loses in the AGR loop **224** and the pressure lift capability of the venturi or ejector **230** ($\Delta P_{LIFT\_EJC}$).

$$\Delta P_{BLWR\_TRGT} = \Delta P_{LIFT} - \Delta P_{LIFT\_EJC} \quad (52)$$

Nominal speed of the recirculation pump or blower **220** (N) may be function of the model of the recirculation pump or blower **220,** the operating curve of the recirculation pump or blower **220,** the pressure lift of the recirculation pump or blower **220** ($\Delta P_{BLWR}$), the density of the recirculation flow stream **226** ($\rho_B$), and the target volumetric flow rate of the recirculation flow stream **226** (Vdot$_{RC\_TRGT}$).

$$N = f(\text{model, operating curve}, \Delta P_{BLWR}, \text{Vdot}_{RC\_TRGT}, \rho_B) \quad (53)$$

$$\rho_B = P_B / (R_B \times T_B) \quad (54)$$

$R_B$ is the universal gas constant of the recirculation flow stream **226,** $P_B$ is the pressure of the recirculation flow stream **226,** $T_B$ is the temperature of the recirculation flow stream **226.**

Feedback loops may be used to assess the health of the excess fuel ratio ($\lambda_{H2}$) delivered to the fuel cell stack **12.** Alternatively, or additionally, other diagnostic tools such as flow assessment from using pressure sensors across different elements or determined using mixing temperature calculations as described above may be used to assess the health of the excess fuel ratio ($\lambda_{H2}$) delivered to the fuel cell stack **12.**

A net electrical power draw of the recirculation pump or blower **220** may be measured and compared to expected value. The expected value of net electrical power draw of the recirculation pump or blower **220** may derived via calibration:

$$m_{RC} = f(N, \rho_{RC}, PW_{BLW}) \quad (55)$$

N is the speed of the recirculation pump or blower **220,** and PW$_{BLW}$ is the power draw of the recirculation pump or blower **220.**

The target mass flow rate through the recirculation pump or blower **220** (m $_{BLWR\_TRGT}$) may depend on the minimum entrainment ratio (ER$_{MIN}$) and the mass flow rate of the primary flow stream **202** (m $_A$).

$$m_{BLWR\_TRGT} = ER_{MIN} \times m_A \quad (56)$$

The target mass flow rate through the recirculation pump or blower **220** (m $_{BLWR\_TRGT}$) may depend on a target entrainment ratio different from the minimum entrainment ratio (ER$_{MIN}$).

In one embodiment, a correlation based ejector model may be used. A correlation based model may use a look-up table to estimate the entrainment ratio from the ejector model (ER$_{EJT\_MODEL}$) for a given set of boundary conditions. The boundary conditions may comprise the primary nozzle inlet pressure (Po), the secondary inlet pressure (Ps), the anode inlet manifold pressure (P$_{AIM}$) of the fuel cell or fuel cell stack **12,** the exit pressure of the flow stream at the venturi or ejector **230** exit **238** (Pc), the pressure lift ($\Delta P_{LIFT}$), and/or composition of the recirculation flow stream **226.**

The correlation based ejector model may use parameters including but not limited to Pc/Ps, P$_C$/P$_O$, universal gas constant for the primary flow stream **202/420** (R $_A$), universal gas constant for the recirculation flow stream **226** (R $_B$). R $_B$ may be a function of fuel supply pressure (Pcv), fuel supply temperature (Tcv), and/or other variables. Variables may include but are not limited to variables that provide information on fuel cell or fuel cell stack operating state such as fuel cell current or current density, fuel cell stack voltage or fuel cell voltages.

The venturi or ejector may have an effective efficiency ($\eta$). The effective efficiency ($\eta$) may vary with operating conditions of the ejector. The effective efficiency ($\eta$) may depends on the mass flow rate of the primary fuel stream **202/420,** the exit pressure of the flow stream at the venturi or ejector **230** exit **238** (Pc), and/or the secondary inlet temperature (Ts).

$$\eta = f(m\_A), \text{ or } (57)$$

$$\eta = f(m\_A, T_S), \text{ or } (58)$$

$$\eta = f(m\_A, T_S, P_C) \quad (59)$$

The reversible entrainment ratio (RER) or the reversible portion of the entrainment ratio (ER) based on the thermodynamic limits, is defined as:

$$RER = -\Delta\chi\_M / \Delta\chi\_S \quad (60)$$

$\Delta\chi\_M$ is the motive flow exergy and $\Delta\chi\_s$ is the entrained flow exergy. In one embodiment, the reversible entrainment ratio (RER) of the fuel cell system **10/13** for a given set of boundary conditions can be estimated as:

$$\Delta\chi\_M = C_{P\_A}(T_C - T_O) + C_{P\_A}\ln(T_C/T_O) - R\_A \ln(P_C/P_O)(61)$$

$$\Delta\chi\_S = C_{P\_B}(T_C - T_S) + C_{P\_B}\ln(T_C/T_S) - R\_B \ln(P_C/P_S) \quad (62)$$

In one embodiment, entropy of mixing is not considered because there may not be any elements of the venturi or ejector **230** design that target recovery of chemical potential associated with entropy of mixing.
If Ts= To,

$$RER = -R\_A \ln(P_C/P_O) / R\_B \ln(P_C/P_S) \quad (63)$$

The correlation based ejector model may depend on the efficiency of the venturi or ejector **230** and the reversible entrainment ratio (RER). The entrainment ratio determined by the model ($ER_{MODEL}$) may be given by:

$$ER_{MODEL} = \eta \times RER \quad (64)$$

If the entrainment ratio determined by the model ($ER_{MODEL}$) is less than the nominal entrainment ratio ($ER_{NOM}$), the recirculation pump or blower **220** may be turned on.
In one embodiment, a component based model may be used. The component model may comprise determining a breakdown pressure ($P_{BREAKDOWN}$) for a given primary nozzle inlet pressure (Po), the secondary inlet pressure (Ps), ejector nozzle efficiency, and/or ejector mixer efficiency. The component model may comprise determining the critical pressure for a given primary nozzle inlet pressure (Po), the secondary inlet pressure (Ps), ejector nozzle efficiency, and/or ejector mixer efficiency. The critical pressure ($P_{CRIT}$) is defined as the venturi or ejector exit pressure below which the flows within the venturi or ejector mixer are choked, i.e. the venturi or ejector is double choked.
The component model may determine an estimated entrainment ratio ($\Lambda_{ESTIMATED}$) by evaluating or comparing the target anode inlet manifold pressure ($P_{AIM\_TRGT}$) to the breakdown pressure (PBREAKDOWN) and to the critical pressure ($P_{CRIT}$) at the given operating conditions.

$$\Lambda_{ESTIMATED} = (P_{BREAKDOWN} - P_{AIM\_TRGT}) / (P_{BREAKDOWN} - P_{CRIT}) \quad (65)$$

When a component based model is used, the entrainment ratio determined by the model ($ER_{MODEL}$) may be given by:

$$ER_{MODEL} = \Lambda_{ESTIMATED} \times ER_{DOUBLE\_CHOKED} \quad (66)$$

$ER_{DOUBLE\_CHOKED}$ is the entrainment ratio when the fuel cell system **10/13** is double choked under the given operating conditions. If the entrainment ratio determined by the model ($ER_{MODEL}$) is different than a target entrainment ratio ($ER_{MIN}$), the recirculation pump or blower **220** may be turned on/off or the speed of the recirculation pump or blower **220** may be altered.. The estimated entrainment ratio ($\Lambda_{ESTIMATED}$) may overestimate the irreversible portion or the entrainment ratio, so there may be an inherent protection of the entrainment ratio ~0.35.

For example, the entrainment ratio determined by the model ($ER_{MODEL}$) may consistently underestimate the actual entrainment ratio (ER). In one embodiment, this underestimation may not be corrected, providing a level of protection to ensure entrainment ratio (ER) is met robustly. This may ensure that the recirculation pump or blower **220** may be turned on when not needed and/ or provide a margin for measurement uncertainties. In other embodiments, a correction factor and/or an additional term may be added to the entrainment ratio determined by the model ($ER_{MODEL}$) to account for the underestimation.

The component model may comprise estimating the reversible entropy loss of the primary or motive flow **202/420** ($\Delta s_{\_REV\_M}$) and of the recirculation or entrained flow **226** ($\Delta s_{\_REV\_M}$. The component model may comprise determining the generated entropy loss of the primary or motive flow **202/420** ($\Delta s_{\_GEN\_M}$) and of the recirculation or entrained flow **226** ($\Delta s_{\_GEN\_E}$). The entrainment ratio determined by the model ($ER_{MODEL}$) may be given by:

$$ER_{MODEL} = (\Delta s_{\_REV\_M} - \Delta s_{\_GEN\_M})/ (\Delta s_{\_REV\_E} - \Delta s_{\_GEN\_E}) \quad (67)$$

$$\Delta s_{\_REV\_M} = C_{P\_A}\ln(T_C/T_O) - R_{\_A}\ln(P_C/P_O) \quad (68)$$

$$\Delta s_{\_REV\_E} = C_{P\_B}\ln(T_C/T_S) - R_{\_B}\ln(P_C/P_S) \quad (69)$$

$$\Delta s_{\_GEN\_M} = f(Ma\_P2, \eta_{\_MIXER}) \quad (70)$$

$$\Delta s_{\_GEN\_E} = f(\eta_{\_SUCTION}, Ma\_S2, \eta_{\_MIXER}) \quad (71)$$

Ma_P2 is the Mach number in the primary nozzle of the venturi or ejector **230**. Ma_S2 is the Mach number in the suction chamber of the venturi or ejector **230**. $\eta_{\_MIXER}$ is efficiency of the mixer of the venturi or ejector **230**. $\eta_{\_SUCTION}$ is efficiency of the suction chamber of the venturi or ejector **230**.

Since the entropy losses are dependent on the Mach number in the suction chamber of the venturi or ejector **230** (MA_S2), which is dependent on the entrainment ratio of the fuel cell system **10/13,** a numerical methods may be required to solve the model described above. For example, the entrainment ratio when the fuel cell system **10/13** is choked for a given set of operating or boundary conditions ($ER_{CHOKED}$) may be determined. The entropy loss of the primary or motive flow **202/420** ($\Delta s_{\_GEN\_M}$) may be calculated for a range of A= ER/ $ER_{CHOKED}$, where A ranges from about 1 to about 1.0. Mach number in the suction chamber of the venturi or ejector **230** (MA S2), and the Mach number in the primary nozzle of the venturi or ejector **230** (MA P2) may be used for the calculation of the entropy loss of the primary of motive flow **202/420** ($\Delta s_{\_GEN\_M}$). The entropy loss of the recirculation or entrained flow **226** ($\Delta s_{\_GEN\_E}$) may be calculated for the same range of A= ER/ $ER_{CHOKED}$. The entrainment ratio determined by the model ($ER_{MODEL}$) may be given by:

$$ER_{MODEL} = f(\Lambda, \text{boundary conditions}) \quad (72)$$

The A for which $ER_{MODEL} = \Lambda \times ER_{CHOKED}$ may be determined. If the entrainment ratio determined by the model ($ER_{MODEL}$) is less than the nominal entrainment ratio ($ER_{NOM}$), the recirculation pump or blower **220** may be turned on.

As previously described, the blower pressure ($\Delta P_{\_BLWR}$) is a function of the Q, N, $\rho$.

$$\Delta P_{\_BLWR} = f(Q_{\_BLWR}, N, \rho) \quad (73)$$

$Q_{\_BLWR}$, the flow rate through the recirculation pump or blower **220** may be determined based on the performance and/or operation of the venturi or ejector **230** at a given secondary inlet pressure (Ps), primary nozzle inlet pressure (Po), and the anode inlet manifold pressure ($P_{AIM}$).

The integrated controls of the venturi or ejector **230** and the recirculation pump or blower **220** comprising one or more controllers such as the blower controller **229** may monitor the conditions at which the venturi or ejector **230** may need the support of the recirculation pump or blower **220** to deliver the required entrainment ratio (ER). In some embodiments, the integrated controls of the venturi or ejector **230** and the recirculation pump or blower **220** comprising one or more controllers such as the blower controller **229** or ejector controller **239** may monitor the primary nozzle inlet pressure (Po), the anode inlet pressure ($P_{AIM}$), the required pressure lift ($\Delta P_{LIFT}$), the temperature change across the recirculation pump or blower **220,** and/or the recirculation pump or blower **220** power.

The venturi or ejector **230** and/or the recirculation pump or blower **220** may have a sensor to monitor variables including but not limited to fuel density, fuel mass flow, fuel volumetric flow, primary nozzle inlet pressure (Po), and secondary inlet pressure (Ps), and/or the pressure lift ($\Delta P_{LIFT}$), the temperature change across the recirculation pump or blower **220,** or the recirculation pump or blower **220** power. In some embodiments, the sensor may be a virtual sensor and/or physical sensor.

A model or simulation of the fuel cell system **10/13** may be used to predict when the venturi or ejector **230** requires recirculation pump or blower **220** support. The integrated controls of the venturi or ejector **230** and the recirculation pump or blower **220** comprising one or more controllers such as the blower controller or ejector controller may send target performance/operation values based on the model or simulation to the recirculation pump or blower **220**. The model of the recirculation pump or blower **220** may use the recirculation pump or blower **220** operating conditions and the target performance of the recirculation pump or blower **220** to determine the operation of the recirculation pump or blower **220.**

The speed of the recirculation pump or blower **220** may be predicted based on the model or simulation of the fuel cell system **10/13.** In some embodiments, the model or simulation of the fuel cell system **10/13** may predict changes in variables including but not limited to fuel volumetric flow, primary nozzle inlet pressure (Po), and secondary inlet pressure (Ps), the pressure lift ($\Delta P_{LIFT}$), the temperature change across the recirculation pump or blower **220,** and/or the recirculation pump or blower **220** power.

The integrated controls of the venturi or ejector **230** and the recirculation pump or blower comprising one or more controllers such as the blower controller **229** or ejector controller **239** may be used to run diagnostics on the fuel cell system **10/13.** The integrated controls of the venturi or ejector **230** and the recirculation pump or blower **220** comprising one or more controllers such as the blower controller or ejector controller may compare the actual measurements of variables including but not limited to fuel density, fuel mass flow, fuel volumetric flow, primary nozzle inlet pressure (Po), and secondary inlet pressure (Ps), and/or the pressure lift ($\Delta P_{LIFT}$) made using pressure sensors **263** to the expected measurements of variables including but not limited to fuel density, fuel mass flow, fuel volumetric flow, primary nozzle inlet pressure (Po), and secondary inlet pressure (Ps), the pressure lift ($\Delta P_{LIFT}$), the temperature change across the recirculation pump or blower **220,** and/or the recirculation pump or blower **220** power determined using the model or simulation of the fuel cell system **10/13.**

The integrated controls of the venturi or ejector **230** and the recirculation pump (blower) **220** comprising one or more controllers such as the blower controller or ejector controller may use information such as fuel cell stack **12** voltage to diagnose whether a fuel management system monitoring/controlling the fuel cell system **10/13** is delivering required flow rate.

Adaptive control methods may be used to incorporate or retain any required adjustments. For example, stack voltage and cell voltage measurements may be used to incorporate or retain any required adjustments. In some embodiments, the entrainment ratio determined by the model ($ER_{MODEL}$) may be used by one or more controller(s) such as the blower controller **229,** the by-pass valve controller **449,** or the ejector controller **239** as a diagnostic tool. In some embodiments, the blower controller **229,** the by-pass valve controller **239,** or the ejector controller **449** may be the same.

The one or more controllers **229, 239, 249** for monitoring and/or controlling the operation of the recirculation pump or blower **220** in the fuel cell system **10/13,** measuring and/or controlling the excess flow ratio ($\lambda$) or entrainment ratio (ER), controlling the by-pass valve or controlling the operation of one or more venturi or ejectors **230** may be implemented, in some cases, in communication with hardware, firmware, software, or any combination thereof present on or outside the in the fuel cell system **10/13** comprising the fuel cell or fuel cell stack **12**. In some embodiments, the one or more controllers **229, 239, 249** for monitoring and/or controlling the physical or virtual sensors **262, 263** used in the fuel cell system **10/13** may be implemented, in some cases, in communication with hardware, firmware, software, or any combination thereof present on or outside the fuel cell system **10/13** comprising the fuel cell **20** or fuel cell stack **12.** Information may be transferred to the one or more controllers using any one or more communication technology (e.g., wired or wireless communications) and associated protocols (e.g., Ethernet, InfiniBand®, Wi-Fi®, Bluetooth®, WiMAX, 3G, 4G LTE, 5G, etc.) to effect such communication.

The one or more controllers **229, 239, 249** may be in a computing device. The computing device may be embodied as any type of computation or computer device capable of performing the functions described herein, including, but not limited to, a server (e.g., stand-alone, rack-mounted, blade, etc.), a network appliance (e.g., physical or virtual), a high-performance computing device, a web appliance, a distributed computing system, a computer, a processor-based system, a multiprocessor system, a smartphone, a tablet computer, a laptop computer, a notebook computer, and a mobile computing device.

The computing device may include an input/output (I/O) subsystem, a memory, a processor, a data storage device, a communication subsystem, a controller, and a display. The computing device may include additional and/or alternative components, such as those commonly found in a computer (e.g., various input/output devices), in other embodiments. In other embodiments, one or more of the illustrative components may be incorporated in, or otherwise form a portion of, another component. For example, the memory, or portions thereof, may be incorporated in the processor.

The following described aspects of the present invention are contemplated and non-limiting:

A first aspect of the present invention relates to a fuel stack system or apparatus. The fuel cell stack system includes a first flow stream and a second flow stream mixing to form a third flow stream and a controller. The third flow stream flows through an anode inlet in a fuel cell stack in the fuel cell stack system. The controller compares an excess fuel ratio of the fuel cell stack system to a target excess fuel ratio of the fuel cell stack system.

A second aspect of the present invention relates to a method of determining an excess fuel ratio of a fuel cell stack system or apparatus. The method includes the steps of mixing a first flow stream and a second flow stream to form a third flow stream, flowing the third flow stream through an anode inlet in a fuel cell stack, and using a controller to compare an excess fuel ratio of the fuel cell stack system to a target excess fuel ratio of the fuel cell stack system.

In the first and second aspect of the present invention, the fuel cell stack system may further include a blower, an ejector, or a by-pass valve. In the first and second aspect of the present invention, the controller may determine and/or the method may further include the controller determining when to operate the blower or may determine the blower speed depending on the excess fuel cell stack system. In the first and second aspect of the present invention, the controller may determine and/or the method may further include the controller determining the operation of the by-pass valve depending on the excess fuel ratio of the fuel cell stack system. In the first and second aspect of the present invention, the fuel cell stack system may include a first ejector and a second ejector. The controller may determine and/or the method may further include the controller determining whether to operate the first ejector, the second ejector, or both the first and second ejectors depending on the excess fuel ratio of the fuel cell stack system.

In the first and second aspect of the present invention, the fuel cell stack system may include at least one physical or virtual sensor. In the first and second aspect of the present invention, the physical or virtual sensor may be a single point pressure sensor or a differential pressure sensor. In the first and second aspect of the present invention, the physical or virtual sensor may measure and/or the method may further include the physical or virtual sensor measuring pressure across the fuel cell stack, measure and/or measuring pressure across an ejector, or measure and/or measuring pressure across a blower in the fuel cell stack system. In the first and second aspect of the present invention, the controller may further measure and/or the method may further include the controller determining and/or measuring mass flow rate in the first flow stream or the mass flow rate in the second flow stream. The controller may determine and/or the method may further include the controller determining an entrainment ratio of the fuel cell stack system based on the measured pressure across the fuel cell stack or the measured pressure across the ejector, and based on the measured mass flow rate in the first flow stream or the measured mass flow rate in the second flow stream.

In the first and second aspect of the present invention, if the entrainment ratio of the system is different than a target entrainment ratio, the controller may operate and/or the method may further include the controller operating the blower, alter and/or altering the speed of the blower, operate and/or operating one or more ejectors, or operate and/or operating the by-pass valve. If the one or more ejectors and/or the fuel cell stack system includes a first ejector and a second ejector, the controller may determine and/or the method may include the controller determining the operation of the first ejector and the second ejector. In the first and second aspect of the present invention, the entrainment ratio may have an uncertainty of less than 12%.

In the first and second aspect of the present invention, the physical or virtual sensor may include a temperature sensor. In the first and second aspect of the present invention, the temperature sensor may measure and/or the method may further include the temperature sensor measuring a temperature difference across a mixing point in the fuel cell stack system. In the first and second aspect of the present invention, the controller may determine and/or the method may further include the controller determining an entrainment ratio of the fuel cell stack system based on the temperature difference across the mixing point by using energy balance in the fuel cell stack system. In the first and second aspect of the present invention, the temperature difference across the mixing point may be maximized.

In the first and second aspect of the present invention, if the entrainment ratio of the fuel cell stack system is different than a target entrainment ratio, the controller may operate and/or the method may further include the controller operating a blower, alter and/or altering the speed of the blower, operate and/or operating one or more ejectors, or operate and/or operating a by-pass valve. If the one or more ejectors includes a first ejector and a second ejector, the controller may determine and/or the method may include the controller determining the operation of the first ejector and the second ejector.

In the first and second aspect of the present invention, the controller may use and/or the method may further include the controller using a model to determine an entrainment ratio of the fuel cell stack system based on operating conditions of the fuel cell stack system.

In the first and second aspect of the present invention, a model may be used to determine the entrainment ratio of the fuel cell stack system based on operating conditions of the fuel cell stack system. The model may be a correlational model or a component based model. In the first and second aspect of the present invention, the fuel cell stack system may further include a blower, and the controller may operate and/or the method may further include the controller operating the blower or alter the speed of the blower if the entrainment ratio of the fuel cell stack system is different than a target entrainment ratio of the fuel cell stack system. In the first and second aspect of the present invention, the fuel cell stack system may include a first ejector and a second ejector. The controller may further determine and/or the method may further include the controller determining whether to operate the first ejector, the second ejector, or both the first ejector and the second ejector depending on the excess fuel ratio of the fuel cell stack system.

In the first and second aspect of the present invention, the controller may use and/or the method may further include the controller using a diagnostic tool to adapt the model. In the first and second aspect of the present invention, the diagnostic tool may include using and/or may comprise fuel cell voltage, fuel cell stack voltage, a pressure sensor, or a temperature sensor to determine the entrainment ratio of the fuel cell stack system.

In the first and second aspect of the present invention, the fuel cell stack system may include a blower and the model used to determine the entrainment ratio of the fuel cell stack system may be a blower model that predicts performance of the blower based on operation conditions of the fuel cell stack system.

The features illustrated or described in connection with one embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the scope of the claims. The detailed description is, therefore, not to be taken in a limiting sense.

. As used herein, an element or step recited in the singular and proceeded with the word "a" or "an" should be understood as not excluding plural of said elements or steps, unless such exclusion is explicitly stated.

Furthermore, references to "one embodiment" of the presently described subject matter are not intended to be interpreted as excluding the existence of additional embodiments that also incorporate the recited features. Specified numerical ranges of units, measurements, and/or values include, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third," and the like, as used herein do not denote any order or importance, but rather are used to distinguish one element from another. The term "or" and "and/or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps. The phrase "consisting of' or "consists of' refers to a compound, composition, formulation, or method that excludes the presence of any additional elements, components, or method steps.

The term "consisting of' also refers to a compound, composition, formulation, or method of the present disclosure that excludes the presence of any additional elements, components, or method steps. The phrase "consisting essentially of' or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are example embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the scope of the invention.

**Claims**

1.  A fuel cell stack system comprising:

    a first flow stream and a second flow stream mixing to form a third flow stream,
    the third flow stream flowing through an anode inlet in a fuel cell stack in the fuel cell stack system, and
    a controller,
    wherein the controller compares an excess fuel ratio of the fuel cell stack system to a target excess fuel ratio of the fuel cell stack system.

2.  The system of claim 1, wherein the fuel cell stack system further comprises a blower, an ejector, or a by-pass valve.

3.  The system of claim 2, wherein the fuel cell stack system comprises a first ejector and a second ejector, and the controller determines whether to operate the first ejector, the second ejector, or both the first and second ejectors depending on the excess fuel ratio of the fuel cell stack system.

4.  The system of any preceding claim, wherein the fuel cell stack system comprises at least one physical or virtual sensor.

5.  The system of claim 4, wherein the physical or virtual sensor is a single point pressure sensor or a differential pressure sensor.

6.  The system of claim 4 or 5, wherein the physical or virtual sensor is configured to measure pressure across the fuel cell stack, measure pressure across an ejector, or measure pressure across a blower in the fuel cell stack system.

7.  The system of claim 6, wherein the controller further measures mass flow rate in the first flow stream or the mass flow rate in the second flow stream, and wherein the controller determines an entrainment ratio of the fuel cell stack system based on the measured pressure across the fuel cell stack or the measured pressure across the ejector, and based on the measured mass flow rate in the first flow stream or the measured mass flow rate in the second flow stream.

8. The system of claim 7, wherein if the entrainment ratio of the system is different than a target entrainment ratio, the controller operates the blower, alters the speed of the blower, operates one or more ejectors, or operates the by-pass valve, and wherein if the one or more ejector comprises a first ejector and a second ejector, the controller determines the operation of the first ejector and the second ejector.

9. The system of any of claims 4 to 8, wherein the physical or virtual comprises a temperature sensor.

10. The system of claim 9, wherein the temperature sensor measures a temperature difference across a mixing point in the fuel cell stack system.

11. The system of claim 10, wherein the the controller determines an entrainment ratio of the fuel cell stack system based on the temperature difference across the mixing point by using energy balance in the fuel cell stack system.

12. The system of claim 11, wherein if the entrainment ratio of the fuel cell stack system is different than a target entrainment ratio, the controller operates a blower, alters the speed of the blower, operates one or more ejectors, or operates a by-pass valve, and wherein if the one or more ejector comprises a first ejector and a second ejector, the controller determines the operation of the first ejector and the second ejector.

13. The system of any preceding claim, wherein the controller uses a model to determine an entrainment ratio of the fuel cell stack system based on operating conditions of the fuel cell stack system.

14. The system of any of claims 4 to 13, wherein the fuel cell stack system comprises a first ejector and a second ejector, and wherein the controller further determines whether to operate the first ejector, the second ejector, or both the first ejector and the second ejector depending on the excess fuel ratio of the fuel cell stack system.

15. A method of determining an excess fuel ratio of a fuel cell stack system comprising:

   mixing a first flow stream and a second flow stream to form the third flow stream,
   flowing the third flow stream through an anode inlet in a fuel cell stack, and
   using a controller to compare an excess fuel ratio of the fuel cell stack system to a target excess fuel ratio of the fuel stack system,
   measuring pressure across the fuel cell stack or measuring pressure across an ejector, or measuring pressure across a blower by using a physical or virtual sensor.

*FIG. 1A*

EP 4 148 840 A1

*FIG. 1B*

CURRENT FLOW

*FIG. 1C*

EP 4 148 840 A1

*FIG. 2*

FIG. 3

EP 4 148 840 A1

13

FUEL SUPPLY → 250/256 → 202

430 → 410, 449
234
420 → 230, 238, 239

232 ← AGR ← 220

226

404 → 204 → (CONSUMED)

(HUMIDIFY)

m_prg

12

*FIG. 4*

*FIG. 5*

EP 4 148 840 A1

*FIG. 6*

EP 4 148 840 A1

Europäisches
Patentamt

European
Patent Office

Office européen
des brevets

**EUROPEAN SEARCH REPORT**

Application Number

EP 22 19 4695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 249 728 A1 (GEN ELECTRIC [US]) 29 November 2017 (2017-11-29) * the whole document * | 1-15 | INV. H01M8/04089 H01M8/0432 H01M8/0438 H01M8/04492 H01M8/04791 |
| X | US 2009/208789 A1 (JANARTHANAM SURIYAPRAKASH AYYANGAR [US] ET AL) 20 August 2009 (2009-08-20) * the whole document * | 1-15 | |
| X | US 2019/245221 A1 (SCOTTO MARK V [US] ET AL) 8 August 2019 (2019-08-08) * the whole document * | 1-15 | |
| A | US 2019/237784 A1 (RAMA PRATAP [GB] ET AL) 1 August 2019 (2019-08-01) * the whole document * | 1-15 | |
| A | DE 10 2007 004590 A1 (DAIMLER AG [DE]; FORD GLOBAL TECH LLC [US]) 31 July 2008 (2008-07-31) * the whole document * | 1-15 | TECHNICAL FIELDS SEARCHED (IPC) H01M |

The present search report has been drawn up for all claims

| Place of search | Date of completion of the search | Examiner |
|---|---|---|
| Munich | 31 January 2023 | Brune, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 4695

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2023

| Patent document cited in search report | | Publication date | Patent family member(s) | | Publication date |
|---|---|---|---|---|---|
| EP 3249728 | A1 | 29-11-2017 | CN | 107464944 A | 12-12-2017 |
| | | | EP | 3249728 A1 | 29-11-2017 |
| | | | JP | 6861577 B2 | 21-04-2021 |
| | | | JP | 2017216230 A | 07-12-2017 |
| | | | KR | 20170134235 A | 06-12-2017 |
| | | | US | 2017346118 A1 | 30-11-2017 |
| | | | US | 2020168934 A1 | 28-05-2020 |
| US 2009208789 | A1 | 20-08-2009 | NONE | | |
| US 2019245221 | A1 | 08-08-2019 | CN | 110137542 A | 16-08-2019 |
| | | | KR | 20190094123 A | 12-08-2019 |
| | | | US | 2019245221 A1 | 08-08-2019 |
| US 2019237784 | A1 | 01-08-2019 | CN | 105594041 A | 18-05-2016 |
| | | | EP | 3053212 A1 | 10-08-2016 |
| | | | GB | 2518681 A | 01-04-2015 |
| | | | JP | 6598784 B2 | 30-10-2019 |
| | | | JP | 2016533627 A | 27-10-2016 |
| | | | US | 2016240875 A1 | 18-08-2016 |
| | | | US | 2019237784 A1 | 01-08-2019 |
| | | | WO | 2015044684 A1 | 02-04-2015 |
| DE 102007004590 A1 | | 31-07-2008 | DE | 102007004590 A1 | 31-07-2008 |
| | | | WO | 2008092545 A1 | 07-08-2008 |

EPO FORM P0459

For more details about this annex : see Official Journal of the European Patent Office, No. 12/82